# EUROPÄISCHE PATENTSCHRIFT

(11) **EP 4 194 749 B1**
(45) Veröffentlichungstag und Bekanntmachung des Hinweises auf die Patenterteilung: **09.07.2025**
(21) Anmeldenummer: 22185698.2
(22) Anmeldetag: 19.07.2022
(51) Int. Cl.: F23D 14/02, F23L 5/02, F23N 5/00, F23N 5/12, F23N 1/02, F23N 5/20, F23N 5/24

(54) **STEUERUNG UND/ODER REGELUNG EINER VERBRENNUNGSVORRICHTUNG UND VERBRENNUNGSVORRICHTUNG**
CONTROL AND/OR REGULATION OF A COMBUSTION DEVICE AND COMBUSTION DEVICE
COMMANDE ET/OU RÉGULATION D'UN DISPOSITIF DE COMBUSTION ET DISPOSITIF DE COMBUSTION

(30) Priorität: 13.12.2021 EP 21214092
(43) Veröffentlichungstag der Anmeldung: 14.06.2023
(73) Patentinhaber: Siemens Aktiengesellschaft, 80333 München (DE)
(72) Erfinder: Lochschmied, Rainer, 76287 Rheinstetten-Forchheim (DE); Schmiederer, Bernd, 76149 Karlsruhe (DE)
(74) Vertreter: Siemens Patent Attorneys

(56) Entgegenhaltungen:
- EP-A1- 3 073 195
- DE-A1- 102004 048 986
- US-A1- 2019 203 936

## Beschreibung

### Hintergrund

Die vorliegende Offenbarung bezieht sich auf Steuerungen und/oder Regelungen, wie sie in Verbrennungsvorrichtungen, beispielsweise in Gasbrennern, im Zusammenhang mit Verbrennungssensoren eingesetzt werden. Verbrennungssensoren in Verbrennungsvorrichtungen sind beispielsweise Ionisationselektroden und/oder Sauerstoffsensoren und/oder Temperatursensoren. Insbesondere bezieht sich die vorliegende Offenbarung auf die Korrektur solcher Steuerungen und/oder Regelungen unter Berücksichtigung der verzögerten Antwort eines Verbrennungssensors.

In Verbrennungsvorrichtungen lässt sich das Verbrennungsluftverhältnis und/oder die Luftzahl λ während der Verbrennung anhand eines Verbrennungssensors ermitteln. Insbesondere lässt sich das Verbrennungsluftverhältnis und/oder die Luftzahl λ anhand eines lonisationsstromes durch eine Ionisationselektrode ermitteln. An den Verbrennungssensor, insbesondere an die Ionisationselektrode, wird dabei zunächst eine Wechselspannung angelegt. Aufgrund der Gleichrichterwirkung einer Flamme fliesst ein Ionisationsstrom als Gleichstrom in nur einer Richtung.

Bei einer Steuerung und/oder Regelung auf einen Verbrennungssensor im Abgaskanal wie beispielsweise einen Sauerstoffsensor reagiert das Sensorsignal je nach Positionierung des Verbrennungssensors im Abgaskanal verzögert. Weiterhin beeinflussen die Kesselgrösse der Verbrennungsvorrichtung, der aktuelle Modulationsgrad und der Verbrennungssensor selbst die Reaktion des Verbrennungssensors auf den Verbrennungsprozess. Unter anderem aufgrund der genannten Einflussgrössen reagiert das Signal eines Verbrennungssensors mit einer Tot- und/oder Verzögerungszeit auf den Verbrennungsprozess in einer Verbrennungsvorrichtung.

Jene Tot- und/oder Verzögerungszeit kann mehrere zehn Sekunden betragen. Teilweise kann jene Tot- und/oder Verzögerungszeit sogar mehr als eine Minute betragen. Das Signal des Verbrennungssensors zeigt mithin an, was vor einigen zehn Sekunden oder gar vor mehr als einer Minute im Rahmen des Verbrennungsprozesses verbrannt worden ist.

Indessen ist es möglich, dass sich der Verbrennungsprozess beispielsweise aufgrund äusserer Einflüsse innerhalb jener Tot- und/oder Verzögerungszeit ändert. Ferner kann zum Zeitpunkt der Rückmeldung eines Signales durch den Verbrennungssensors sich der Verbrennungsprozess weiter geändert haben, als es das Signal des Verbrennungssensors angibt. Insbesondere kann sich der Verbrennungsprozess derart verändert haben, dass ein normaler Eingriff einer Steuerung und/oder Regelung zu langsam ist. Infolge des zu langsamen Eingriffs der Steuerung und/oder Regelung ist dann möglich, dass kritische Verbrennungsbedingungen nicht mehr verhindert werden können. Ferner besteht die Möglichkeit, dass die Änderung des Verbrennungsprozesses so weit fortgeschritten ist, dass das Signal des Verbrennungssensors in eine Sättigung geht. Das Signal des Verbrennungssensors ist in diesem Fall kein aussagekräftiges Indiz mehr für den Verbrennungsprozess.

Darüber hinaus besteht die Möglichkeit, dass sich das Verhältnis der Verbrennungsprodukte so weit verändert hat, dass die Flamme abreisst. Die Folgen daraus sind ein kurzzeitiges Ausströmen von unverbranntem Brennstoff und/oder eine Unterbrechung der Wärmeerzeugung und/oder die Notwendigkeit eines Neustarts der Verbrennungsvorrichtung.

Demnach besteht eine Gefahr immer ungünstigerer Verbrennungsbedingungen und/oder eines immer ungünstigeren Verbrennungsprozesses. Die Steuerung und/oder Regelung kann bedingt durch die Tot- und/oder Verzögerungszeit der Verbrennungsvorrichtung und/oder der Systemlaufzeit der Steuerung und/oder Regelung nicht ausreichend schnell reagieren. Insbesondere kann die Steuerung und/oder Regelung auf solche ungünstigen Verbrennungsbedingungen und/oder auf einen solchen ungünstigen Verbrennungsprozess nicht ausreichend schnell reagieren.

Entsprechende Veränderungen im Verbrennungsprozess können beispielsweise durch eine Änderung in der Versorgung mit Brennstoff, insbesondere mit Brenngas, hervorgerufen werden. Ferner kann ein plötzlicher Zustrom von Luft anderer Temperatur den Verbrennungsprozess schnell ändern. Jene Änderung erfolgt schneller, als eine Steuerung und/oder Regelung unter Berücksichtigung ihrer Systemlaufzeit und/oder der Tot- und/oder Verzögerungszeit der Verbrennungsvorrichtung in den Verbrennungsprozess eingreifen kann. Zudem können nicht passend eingestellte Modulationskurven von Luft- oder Brennstoffaktoren zu raschen Veränderungen im Verbrennungsprozess führen. Insbesondere können solche Modulationskurven bei einem Übergang von einer hohen Leistung der Verbrennungsvorrichtung auf eine tiefe Leistung derselben problematisch sein.

Eine europäische Patentanmeldung EP1510758A1 wurde eingereicht am 29. August 2003 durch SIEMENS BUILDING TECH AG. Die Anmeldung wurde veröffentlicht am 2. März 2005. EP1510758A1 beinhaltet ein Verfahren zur Regelung beziehungsweise Steuerung eines Brenners.

EP1510758A1 offenbart einen Sensor, welcher Sauerstoff im Abgas einer Verbrennungsvorrichtung detektiert. Eine Steuerung und/oder Regelung ermittelt aus dem vom Sensor detektierten Istwert und einem entsprechenden Sollwert eine Regelabweichung. Die Regelabweichung wird in eine von der Leistung der Verbrennungsvorrichtung unabhängige Stellgrösse umgesetzt. Auf Basis der leistungsunabhängigen Stellgrösse und auf Basis von Parametern der Verbrennungsvorrichtung für deren Arbeitspunkte wird zudem eine leistungsabhängige Stellgrösse ermittelt. Jene leistungsabhängige Stellgrösse wird anschliessend in ein Steuersignal zur Beeinflussung des Verbrennungsluftverhältnisses λ umgesetzt.

Ein weiteres europäische Patent EP0644376B1, Verfahren und Vorrichtung zur Regelung eines Brenners, ist erteilt am 29. Oktober 1997 an LANDIS & GYR BUSINESS SUPPORT. EP0644376B1 nimmt eine Priorität vom 22. September 1993 in Anspruch.

EP0644376B1 offenbart eine Sauerstoffsonde, anhand welcher einen Restsauerstoffgehalt im Abgas einer Verbrennungsvorrichtung gemessen wird. Aus dem Ist-Wert des Restsauerstoffgehaltes und einem leistungsabhängigen Sollwert des Restsauerstoffgehaltes ermittelt ein Regler eine Regelabweichung. Dabei kommt ein proportionaler, integraler und derivativer Regler zum Einsatz, dessen proportionale, integrale und derivative Anteile leistungsunabhängig sind. Jener proportionale, integrale und derivative Regler ermittelt zunächst eine leistungsunabhängige Stellgrösse. Schliesslich wird aus der leistungsunabhängigen Stellgrösse durch Multiplikation mit einer leistungsabhängigen Streckenverstärkung eine leistungsabhängige Stellgrösse.

Das europäische Patent EP3301362B1, VERFAHREN ZUR REGELUNG TURBULENTER STRÖMUNGEN, ist erteilt am 25. März 2020 an SIEMENS AG. Anmeldetag von EP3301362B1 ist der 30. September 2016.

EP3301362B1 offenbart eine Tabelle, welche einer Luftzufuhr durch einen Luftzufuhrkanal eine erste Klappenstellung, eine zweite Klappenstellung und einen Durchfluss durch einen Seitenkanal des Luftzufuhrkanales gegenüberstellt. Soll eine Luftzufuhr eingestellt werden, welche zwischen zwei Tabellenwerten liegt, wird eine erste Klappenstellung angefahren, welche zwischen den Tabellenwerten für die entsprechenden Klappenstellungen liegt. Insbesondere kann ein Sollwert entsprechend einem Abstand von x% zwischen zwei Tabellenwerten der Luftzufuhr auf einen Abstand von x% zwischen den entsprechenden Tabellenwerten der Klappenstellung abgebildet werden.

Eine Patentanmeldung US2019/203936A1 wurde eingereicht am 11. Juli 2018 durch Honeywell International Inc (Morris Plains, NJ). Die Anmeldung wurde veröffentlicht am 4. Juli 2019. US2019/203936A1 nimmt eine Priorität vom 29. Dezember 2017 in Anspruch. US2019/203936A1 behandelt eine Regelung einer Verbrennungsvorrichtung.

Eine europäische Patentanmeldung EP3073195A1 wurde eingereicht am 23. März 2015 durch HONEYWELL TECHNOLOGIES SARL. Die Anmeldung wurde veröffentlicht am 28. September 2016. EP3073195A1 behandelt ein Verfahren zur Kalibrierung eines Gasbrenners.

Eine Patentanmeldung DE102004048986A1 wurde eingereicht am 2. Oktober 2004 durch Vaillant GmbH, 42859 Remscheid. Die Anmeldung wurde veröffentlicht am 4. Mai 2005. DE102004048986A1 behandelt ein Verfahren zur Regelung eines Gasbrenners, insbesondere bei Heizungsanlagen mit Gebläse. DE102004048986A1 nimmt eine Priorität vom 8. Oktober 2003 in Anspruch.

### Zusammenfassung

Die Erfindung ist im beigefügten Anspruchssatz beschrieben.

Bisherige Lösungen beinhalten, dass sich ein Installateur vor Ort überzeugen sollte, dass eingestellte Modulationskurven zur Verbrennungsvorrichtung anpassen. Der Installateur wählt vor Ort die Parameter einer Steuerung und/oder Regelung. Dabei ist ein Kompromiss einzugehen zwischen einer schnellen Steuerung und/oder Regelung einerseits und der Vermeidung einer Schwingungsneigung andererseits. Weiterhin ist eine Überreaktion der Steuerung und/oder Regelung zu vermeiden.

Ferner scheint eine Positionierung eines Verbrennungssensors möglichst nahe am heissen Bereich möglich. Jener Ansatz stösst je nach Bauart einer Verbrennungsvorrichtung an ihre Grenzen. Zudem ist es möglich, dass eine solche Positionierung die Lebensdauer des Sensors verringert. Ebenfalls ist zu befürchten, dass die Genauigkeit des Sensors infolge der Positionierung möglichst nahe am heissen Bereich nachlässt.

Die vorliegende Offenbarung lehrt eine Reaktion einer Steuerung und/oder Regelung auf eine rasche Veränderung eines Verbrennungsprozesses. Die vorliegende Offenbarung lehrt weiterhin eine Rückkehr in den normalen Regelbetrieb. Zunächst nimmt die Steuerung und/oder Regelung ein Signal eines Sensors, beispielsweise eines Verbrennungssensors, entgegen. Aus diesem Signal wird ein Messwert erzeugt. Dabei kann vorteilhaft ein Analog-Digital-Wandler und/oder eine Delta-Sigma Einheit zum Einsatz kommen.

Die Steuerung und/oder Regelung kann einerseits reagieren, indem ein Sollwert für einen Messwert aus dem Signal eines Sensors und/oder aus dem Grenzwert des Messwertes neu berechnet wird. Nachfolgend wird der Sollwert geändert. Vorzugsweise wird ein Sollwert für einen Messwert aus dem Signal eines Sensors im Feuerraum oder Abgasweg und/oder aus dem Grenzwert des Messwertes neu berechnet und geändert. Anstelle eines berechneten Wertes kann der Sollwert auch auf einen fest hinterlegten Wert, für den Fall der Grenzwert Über- oder Unterschreitung, gesetzt und mithin geändert werden. Die Steuerung und/oder Regelung steuert und/oder regelt anschliessend auf den neu berechneten oder gesetzten und mithin geänderten Sollwert. Somit wird eine verstärkte bzw. schnellere Reaktion der Steuer- und/oder Regeleinrichtung erreicht. Der neue Sollwert wird einerseits so gewählt, dass nach Ablauf der Tot- und/oder Verzögerungszeit der Verbrennungsvorrichtung neu aufgenommene Messwerte den oberen und/oder unteren Grenzwert einhalten. Mit anderen Worten, es werden kritische Emissionen, insbesondere kritische Emissionen an Kohlenstoffmonoxid, vermieden. Zumindest wird deren Auftreten in der zeitlichen Dauer deutlich verkürzt. Andererseits wird der neu berechnete Sollwert so gewählt, dass die Verbrennungsvorrichtung stabil betrieben werden kann.

Die Steuerung und/oder Regelung kann andererseits reagieren, indem direkt in die Aktoren der Verbrennungsvorrichtung eingegriffen wird. Infolge des direkten Eingriffes wird die Durchflussmengen der Verbrennungsprodukte zueinander um ein vorbestimmtes Mass geändert. Mit anderen Worten, das Verbrennungsluftverhältnis und/oder die Luftzahl λ und/oder der Sauerstoffgehalt wird durch einen direkten Eingriff geändert. Das neue Verbrennungsluftverhältnis und/oder die neue Luftzahl λ wird einerseits so gewählt, dass nach Ablauf der Tot- und/oder Verzögerungszeit der Verbrennungsvorrichtung neu aufgenommene Messwerte den Grenzwert einhalten. Der neue Sauerstoffgehalt kann so gewählt werden, dass nach Ablauf der Tot- und/oder Verzögerungszeit der Verbrennungsvorrichtung neu aufgenommene Messwerte den Grenzwert einhalten. Insbesondere wird der obere und/oder der untere Grenzwert eingehalten. Mithin werden kritische Emissionen, insbesondere kritische Emissionen an Kohlenstoffmonoxid, vermieden. Zumindest wird deren Auftreten in der zeitlichen Dauer deutlich verkürzt. Andererseits wird das neue Verbrennungsluftverhältnis und/oder die neue Luftzahl λ und/oder der neue Sauerstoffgehalt so gewählt, dass die Verbrennungsvorrichtung stabil betrieben werden kann.

Vorzugsweise greift die Steuerung und/oder Regelung derart in den Verbrennungsprozess ein, dass die Verbrennungsvorrichtung nicht oszilliert. Das heisst, dass die Aktoren der Luft- und Brennstoffzufuhr nicht oder im Wesentlichen nicht oszillierend angesteuert und/oder geregelt werden. Infolgedessen zeigen die durch einen Verbrennungssensor aufgenommenen Messwerte kein oder im Wesentlichen kein oszillierendes Verhalten.

Idealerweise greift die Steuerung und/oder Regelung derart in den Verbrennungsprozess ein, dass die Verbrennungsvorrichtung stabil arbeitet. Das heisst, dass die Ansteuersignale für die Aktoren im gültigen Wertebereich der Aktoren liegen. Zudem ist das Verbrennungsgemisch so eingestellt und/oder eingeregelt, dass die Flamme nicht abreisst. Ferner liegen die durch einen Verbrennungssensor aufgenommenen Messsignale im gültigen Bereich der Eingangssignale der Steuerung und/oder Regelung.

Nach einem solchen Eingriff erfolgt die Rückkehr der Steuerung und/oder Regelung in den normalen Steuer- und/oder Regelbetrieb abhängig vom Zeitverhalten der Verbrennungsvorrichtung. Im Fall des geänderten Sollwertes wird dieser Sollwert abhängig vom Zeitverhalten wieder auf den ursprünglichen Sollwert zurückgeführt. Im Fall eines direkten Eingriffes auf die Aktoren, wird das neue Verhältnis der Durchflussmengen der Verbrennungsprodukte zueinander zunächst unverändert beibehalten. Wenn die Auswirkung des Eingriffs im Signal des Verbrennungssensors sichtbar geworden ist, wird in den normalen Steuer- und/oder Regelbetrieb zurückgekehrt. Danach ist der Verbrennungsprozess an die neuen Umgebungsbedingungen angepasst.

Ferner ist eine Optimierung der Steuerung und/oder Regelung anhand eines weiteren Rechners vorgesehen. Der weitere Rechner ist entfernt von der Steuerung und/oder Regelung angeordnet. Der weitere Rechner ist vorteilhaft verbunden mit einer Vielzahl ähnlicher Steuerungen und/oder Regelungen. Der weitere Rechner ermöglicht beispielsweise über eine statistische Herangehensweise die Optimierung von Steuerungen und/oder Regelungen im Betrieb.

### Kurze Beschreibung der Zeichnungen

Verschiedene Merkmale werden dem Fachmann aus der folgenden detaillierten Beschreibung der offenbarten nicht einschränkenden Ausführungsformen ersichtlich. Die Zeichnungen, die der detaillierten Beschreibung beiliegen, können kurz wie folgt beschrieben werden:
FIG 1 zeigt eine Verbrennungsvorrichtung mit einem Verbrennungssensor in Form eines Abgassensors.
FIG 2 zeigt eine Verbrennungsvorrichtung mit einem Verbrennungssensor in Form eines Abgassensors und zusätzlich mit einem Sensor im oder am Luftkanal und/oder im oder am Brennstoffkanal.
FIG 3 veranschaulicht einen Zusammenhang zwischen einem Verbrennungsluftverhältnis und den Emissionen einer Verbrennungsvorrichtung.
FIG 4 zeigt eine Steuerung und/oder Regelung in Kommunikation mit einem weiteren Rechner.

### Detaillierte Beschreibung

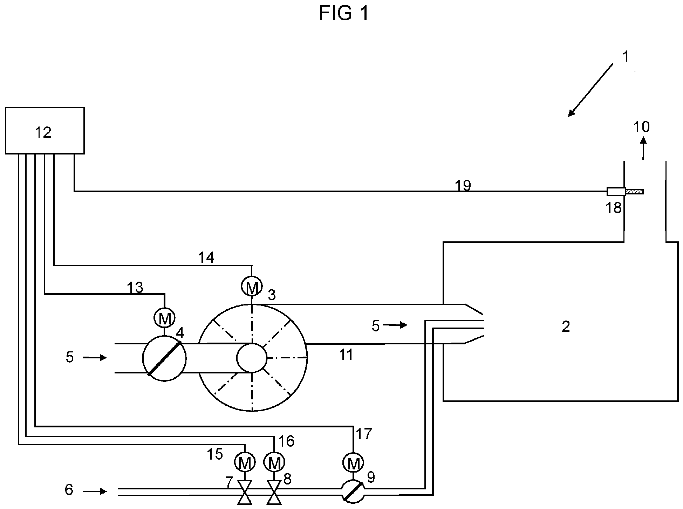

FIG 1 zeigt eine Verbrennungsvorrichtung 1 wie beispielsweise einen bodenstehenden Gasbrenner und/oder einen Ölbrenner. Im Feuerraum 2 der Verbrennungsvorrichtung 1 brennt im Betrieb eine Flamme eines Wärmeerzeugers. Der Wärmeerzeuger tauscht die Wärmeenergie der heissen Brenngase in ein anderes Fluid wie beispielsweise Wasser. Mit dem warmen Wasser wird beispielsweise eine Warmwasserheizungsanlage betrieben und/oder Trinkwasser erwärmt. Gemäss einer anderen Ausführungsform kann mit der Wärmeenergie der heissen Brennstoffe und/oder Brenngase ein Gut beispielsweise in einem industriellen Prozess erhitzt werden. Gemäss einer weiteren Ausführungsform ist der Wärmeerzeuger Teil einer Anlage mit Kraft-Wärme-Kopplung, beispielsweise ein Motor einer solchen Anlage. Gemäss einer anderen Ausführungsform ist der Wärmeerzeuger eine Gasturbine. Ferner kann der Wärmeerzeuger der Erhitzung von Wasser in einer Anlage zur Gewinnung von Lithium und/oder Lithiumkarbonat dienen. Die Abgase 10 werden aus dem Feuerraum 2 beispielsweise über einen Schornstein abgeführt.

Die Luftzufuhr 5 für den Verbrennungsprozess wird über ein (motorisch) angetriebenes Gebläse 3 zugeführt. Über die Signalleitung 14 gibt eine Steuer- und/oder Regeleinrichtung 12 dem Gebläse 3 die Luftzufuhr *V_{L}* vor, die es fördern soll. Damit wird die Gebläsedrehzahl ein Mass für die Luftzufuhr 5.

Gemäss einer Ausführungsform wird die Gebläsedrehzahl der Steuer- und/oder Regeleinrichtung 12 vom Gebläse 3 zurückgemeldet. Beispielsweise ermittelt die Steuer- und/oder Regeleinrichtung 12 die Drehzahl des Gebläses 3 über die Signalleitung 14.

Die Steuer- und/oder Regeleinrichtung 12 umfasst vorzugsweise einen Microcontroller. Die Steuer- und/oder Regeleinrichtung 12 umfasst idealerweise einen Microprozessor. Die Steuer- und/oder Regeleinrichtung 12 kann eine Regeleinrichtung sein. Vorzugsweise umfasst die Regeleinrichtung einen Microcontroller. Die Regeleinrichtung umfasst idealerweise einen Microprozessor. Die Regeleinrichtung kann einen proportionalen und integralen Regler umfassen. Ferner kann die Regeleinrichtung einen proportionalen und integralen und derivativen Regler umfassen.

Ferner kann die Steuer- und/oder Regeleinrichtung 12 eine im Feld programmierbare (Logik-) Gatter-Anordnung umfassen. Ausserdem kann die Steuer- und/oder Regeleinrichtung 12 eine anwendungsspezifische integrierte Schaltung umfassen.

In einer Ausführungsform umfasst die Signalleitung 14 einen Lichtwellenleiter. In einer speziellen Ausführungsform ist die Signalleitung 14 als Lichtwellenleiter ausgeführt. Lichtwellenleiter verschaffen Vorteile im Hinblick auf galvanische Trennung und Schutz vor Explosionen.

Wird die Luftzufuhr 5 über eine Luftklappe und/oder ein Ventil 4 eingestellt, kann als Mass für die Luftzufuhr 5 die Klappen- und/oder Ventilstellung verwendet werden.

Gemäss einer Ausführungsform ist die Luftzufuhr *V_{L}* der Wert der aktuellen Luftdurchflussrate. Die Luftdurchflussrate kann in Kubikmeter Luft pro Stunde gemessen und/oder angegeben sein. Die Luftzufuhr *V_{L}* kann in Kubikmeter Luft pro Stunde gemessen und/oder angegeben sein.

Die Brennstoffzufuhr *V_{B}* wird durch die Steuer- und/oder Regeleinrichtung 12 mit Hilfe eines Brennstoffaktors und/oder eines (motorisch) einstellbaren Ventiles 9 eingestellt und/oder ausgeregelt. In der Ausführung in FIG 1 ist der Brennstoff 6 ein Brenngas. Eine Verbrennungsvorrichtung 1 kann dann an verschiedene Brenngasquellen angeschlossen werden, beispielsweise an Quellen mit hohem Methan-Anteil und/oder an Quellen mit hohem Propan-Anteil. Ebenso ist vorgesehen, die Verbrennungsvorrichtung 1 an eine Quelle eines Gases oder einer Gasmischung angeschlossen ist, wobei das Gas oder die Gasmischung Wasserstoff umfasst. In einer speziellen Ausführungsform ist vorgesehen, dass das Gas oder die Gasmischung mehr als fünf Prozent, insbesondere mehr als fünf Massenprozent, an Wasserstoff umfasst. Die Menge an Brenngas kann beispielsweise durch ein (motorisch) einstellbares Brennstoffventil 9 von der Steuer- und/oder Regeleinrichtung 12 eingestellt werden. Der Ansteuerwert, beispielsweise ein pulsweitenmoduliertes Signal, des Gasventiles ist dabei ein Mass für die Menge an Brenngas. Er ist auch ein Wert für die Brennstoffzufuhr *V_{B}*.

Wird als Brennstoffaktor 9 eine Gasklappe verwendet, so kann als Mass für die Menge an Brenngas die Position der Klappe verwendet werden. Gemäss einer speziellen Ausführungsform werden ein Brennstoffaktor 9 und/oder Brennstoffventil 9 anhand eines Schrittmotors eingestellt. In jenem Fall ist die Schrittstellung des Schrittmotors ein Mass für die Menge an Brenngas. Das Brennstoffventil und/oder die Brennstoffklappe kann auch in einer Einheit mit zumindest einem oder mehreren Sicherheitsabsperrventilen 7, 8 integriert sein. Eine Signalleitung 17 verbindet den Brennstoffaktor 9 mit der Steuer- und/oder Regeleinrichtung 12. In einer speziellen Ausführungsform umfasst die Signalleitung 17 einen Lichtwellenleiter. Lichtwellenleiter verschaffen Vorteile im Hinblick auf galvanische Trennung und Schutz vor Explosionen.

FIG 1 zeigt ebenfalls eine Verbrennungsvorrichtung 1 mit einem Verbrennungssensor 18 zur Erfassung einer Luftzahl λ. Der Verbrennungssensor 18 kann beispielsweise ein Sauerstoffsensor und/oder eine Ionisationselektrode umfassen. Der Verbrennungssensor 18 kann auch ein Sauerstoffsensor sein. Der Verbrennungssensor 18 ist vorzugsweise im Abgaskanal angeordnet.

Der Verbrennungssensor 18 kann ein Abgassensor sein. Der Verbrennungssensor 18 kann einen Abgassensor umfassen.

Eine Signalleitung 19 verbindet den Verbrennungssensor 18 mit der Steuer- und/oder Regeleinrichtung 12. In einer speziellen Ausführungsform umfasst die Signalleitung 19 einen Lichtwellenleiter. Lichtwellenleiter verschaffen Vorteile im Hinblick auf galvanische Trennung und Schutz vor Explosionen.

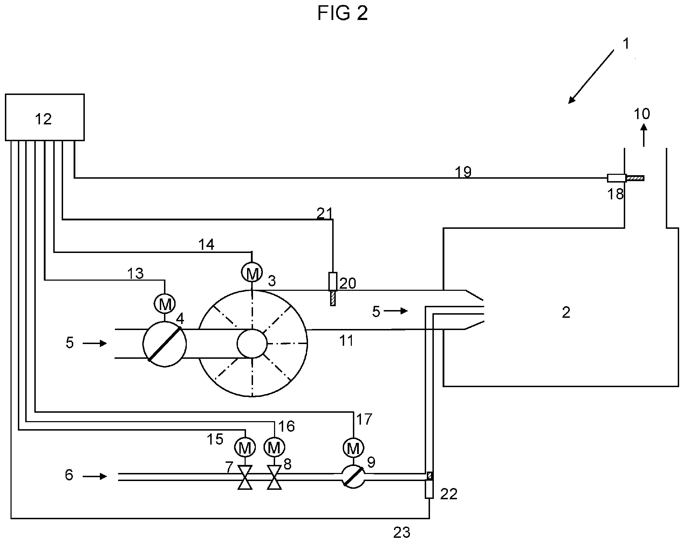

FIG 2 zeigt gegenüber FIG 1 zusätzlich einen Sensor 20 im Luftzufuhrkanal 11. Wird die Luftzufuhr 5 über eine Luftklappe und/oder ein Ventil eingestellt, kann als Mass für die Luftzufuhr 5 die Klappen- und/oder Ventilstellung verwendet werden. Ferner kann ein aus dem Signal eines Drucksensors und/oder Massenstromsensors und/oder Volumenstromsensors abgeleiteter Messwert verwendet werden. Der Sensor 20 ist vorteilhaft im Kanal 11 für die Luftzufuhr 5 angeordnet. Vorteilhaft stellt der Sensor 20 ein Signal bereit, welches anhand einer geeigneten Signalverarbeitungseinheit in einen Strömungsmesswert gewandelt wird.

Massenstromsensoren erlauben die Messung bei grossen Flussgeschwindigkeiten speziell in Verbindung mit Verbrennungsvorrichtungen im Betrieb. Typische Werte solcher Flussgeschwindigkeiten liegen den Bereichen zwischen 0.1 Meter pro Sekunde und 5 Meter pro Sekunde, 10 Meter pro Sekunde, 15 Meter pro Sekunde, 20 Meter pro Sekunde, oder sogar 100 Meter pro Sekunde. Massenstromsensoren, welche sich für die vorliegende Offenbarung eignen, sind beispielsweise OMRON^{®} D6F-W oder Typ SENSOR TECHNICS^{®} WBA Sensoren. Der nutzbare Bereich dieser Sensoren beginnt typisch bei Geschwindigkeiten zwischen 0.01 Meter pro Sekunde und 0.1 Meter pro Sekunde und endet bei einer Geschwindigkeit wie beispielsweise 5 Meter pro Sekunde, 10 Meter pro Sekunde, 15 Meter pro Sekunde, 20 Meter pro Sekunde, oder sogar 100 Meter pro Sekunde. Mit anderen Worten, es können untere Grenzen wie 0.1 Meter pro Sekunde kombiniert werden mit oberen Grenzen wie 5 Meter pro Sekunde, 10 Meter pro Sekunde, 15 Meter pro Sekunde, 20 Meter pro Sekunde, oder sogar 100 Meter pro Sekunde.

Gemäss einer Ausführungsform wird das Signal des Sensors 20 anhand einer Signalleitung 21 zurückgemeldet. Insbesondere kann anhand der Signalleitung 21 ein Signal an die Steuer- und/oder Regeleinrichtung 12 zurückgemeldet werden, welches ein Mass für eine Luftzufuhr 5 ist. Die Signalleitung 21 kann einen Lichtwellenleiter umfassen. Lichtwellenleiter verschaffen Vorteile im Hinblick auf galvanische Trennung und Schutz vor Explosionen. Eine geeignete Signalverarbeitungseinrichtung zur Verarbeitung des Signales des Sensors 20 umfasst idealerweise mindestens einen Analog-Digital-Wandler. Gemäss einer Ausführungsform ist die Signalverarbeitungseinrichtung, insbesondere der oder die Analog-Digital-Wandler, integriert in die Steuer- und/oder Regeleinrichtung 12. Gemäss einer anderen Ausführungsform ist die Signalverarbeitungseinrichtung, insbesondere der oder die Analog-Digital-Wandler, integriert in den Sensor 20. Die Übertragung der Sensorsignale zur Steuer- und/oder Regeleinrichtung 12 erfolgt dann über eine Kommunikationsschnittstelle mit einem vorgegebenen Kommunikationsbusprotokoll.

Als Mass für die Luftzufuhr *V_{L}* kann auch der Messwert eines Drucksensors und/oder eines Massenstromsensors in einem Seitenkanal der Luftzufuhr 5 verwendet werden. Eine Verbrennungsvorrichtung mit Zufuhrkanal und Seitenkanal ist beispielsweise im europäischen Patent EP3301364B1 offenbart. Das europäische Patent EP3301364B1 wurde am 7. Juni 2017 angemeldet und am 7. August 2019 erteilt. Es wird eine Verbrennungsvorrichtung mit Zufuhrkanal und Seitenkanal beansprucht, wobei in den Zufuhrkanal ein Massenstromsensor hineinragt.

Ein Drucksensor und/oder ein Massenstromsensor im Seitenkanal ermittelt ein Signal, welches dem von der Luftzufuhr *V_{L}* abhängigen Druckwert und/oder dem Luftstrom (Teilchen- und/oder Massenstrom) im Seitenkanal entspricht. Vorteilhaft stellt der Sensor ein Signal bereit, welches anhand einer geeigneten Signalverarbeitungseinrichtung in einen Messwert gewandelt wird. Gemäss einer weiteren vorteilhaften Ausführungsform werden die Signale mehrerer Sensoren in einen gemeinsamen Messwert gewandelt. Eine geeignete Signalverarbeitungseinrichtung umfasst idealerweise mindestens einen Analog-Digital-Wandler. Gemäss einer Ausführungsform ist die Signalverarbeitungseinrichtung, insbesondere der oder die Analog-Digital-Wandler, integriert in die Steuer- und/oder Regeleinrichtung 12. Gemäss einer anderen Ausführungsform ist die Signalverarbeitungseinrichtung, insbesondere der oder die Analog-Digital-Wandler, integriert in den Sensor oder die Sensoren. Die Übertragung der Sensorsignale zur Steuer- und/oder Regeleinrichtung 12 erfolgt dann über eine Kommunikationsschnittstelle mit einem vorgegebenen Kommunikationsbusprotokoll.

Weiter zeigt die FIG 2 gegenüber FIG 1 zusätzlich einen Sensor 22 im Brennstoffzufuhrkanal. Als Mass für die Brennstoffmenge kann ein aus dem Signal eines Drucksensors und/oder Massenstromsensors und/oder Volumenstromsensors abgeleiteter Messwert verwendet werden. Der Massenstromsensor kann dabei auch als thermischer Massenstromsensor ausgeführt sein. Der Volumenstromsensor kann beispielsweise als Turbinenradradzähler und/oder Balgenzähler und/oder als Differenzdrucksensor realisiert sein. Der Sensor 22 ist vorteilhaft im Kanal für die Brennstoffzufuhr angeordnet. Eine Signalleitung 23 verbindet den Strömungs- und/oder Drucksensor 22 mit der Steuer- und/oder Regeleinrichtung 12.

Weiterhin kann der Brennstoffaktor 9 ein intern über einen Strömungs- und/oder Drucksensor geregeltes Ventil sein. Ein solches Brennstoffventil 9 erhält einen Sollwert und regelt den Istwert des Strömungs- und/oder Drucksensors auf den Sollwert. Zudem kann das Brennstoffventil 9 auch in einer Einheit mit zumindest einem oder mehreren Sicherheitsabsperrventilen 7, 8 integriert sein. Weiter kann das Brennstoffventil 9 so ausgebildet sein, dass es die Funktion eines der Sicherheitsabsperrventile 7, 8 mit übernimmt. Der Strömungs- und/oder Drucksensor kann dabei als Volumenstromsensor beispielsweise als Turbinenradradzähler und/oder als Balgenzähler und/oder als Differenzdrucksensor realisiert sein. Der Strömungs- und/oder Drucksensor kann auch als Massenstromsensor, beispielsweise als thermischer Massenstromsensor, ausgeführt sein.

Vorteilhaft stellt der Sensor 22 ein Signal bereit, welches anhand einer geeigneten Signalverarbeitungseinheit in einen Strömungsmesswert (Messwert des Teilchen- und/oder Massenstromes und/oder Volumenstromes) gewandelt wird.

Gemäss einer Ausführungsform wird das Signal des Sensors 22 anhand einer Signalleitung 23 zurückgemeldet. Insbesondere kann anhand der Signalleitung 23 ein Signal an die Steuer- und/oder Regeleinrichtung 12 zurückgemeldet werden, welches ein Mass für eine Brennstoffzufuhr 6 ist. Die Signalleitung 23 kann einen Lichtwellenleiter umfassen. Lichtwellenleiter verschaffen Vorteile im Hinblick auf galvanische Trennung und Schutz vor Explosionen. Eine geeignete Signalverarbeitungseinrichtung zur Verarbeitung des Signales des Sensors 22 umfasst idealerweise mindestens einen Analog-Digital-Wandler. Gemäss einer Ausführungsform ist die Signalverarbeitungseinrichtung, insbesondere der oder die Analog-Digital-Wandler, integriert in die Steuer- und/oder Regeleinrichtung 12. Gemäss einer anderen Ausführungsform ist die Signalverarbeitungseinrichtung, insbesondere der oder die Analog-Digital-Wandler, integriert in den Sensor 22. Die Übertragung der Sensorsignale zur Steuer- und/oder Regeleinrichtung 12 erfolgt dann über eine Kommunikationsschnittstelle mit einem vorgegebenen Kommunikationsbusprotokoll.

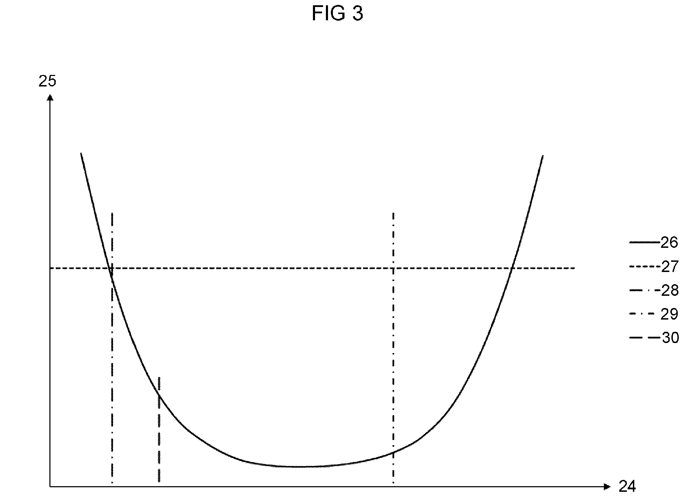

In FIG 3 sind beispielhaft für eine Leistung wie beispielsweise die kritischste Leistung die Emissionen 25 einer Verbrennungsvorrichtung 1 über dem Verbrennungsluftverhältnis und/oder der Luftzahl 24 aufgetragen. Ebenso können in FIG 3 beispielhaft für eine Leistung wie beispielsweise die kritischste Leistung die Emissionen 25 einer Verbrennungsvorrichtung 1 über dem Sauerstoffgehalt aufgetragen sein. Emissionen 25 der Verbrennungsvorrichtung 1 sind beispielsweise Emissionen in Form von Kohlenstoffmonoxid. Eine horizontale Linie 27 gibt einen Schwellwert an, ab welchem die Emissionen 25 der Verbrennungsvorrichtung 1, insbesondere die Emissionen 25 der Verbrennungsvorrichtung 1 in Form von Kohlenstoffmonoxid, kritisch sind. In einer speziellen Ausführungsform liegen die Emissionen 25, insbesondere die Emissionen 25 an Kohlenstoffmonoxid, ab der Linie 27 oberhalb eines kritischen Wertes. Solche kritischen Werte können beispielsweise durch Normen und/oder Verordnungen und/oder Gesetze festgelegt sein.

Die vertikalen Linien in FIG 3 entsprechen jeweils einem Verbrennungsluftverhältnis und/oder einer Luftzahl λ und/oder einem Sauerstoffgehalt. In welchem Verhältnis die Linien zueinander stehen, kann am besten über das Verbrennungsverhältnis und/oder die Luftzahl λ ausgedrückt werden. Zur Vereinfachung werden daher in der weiteren Beschreibung überwiegend die Begriffe Verbrennungsluftverhältnis und/oder Luftzahl λ verwendet.

Der Sauerstoffgehalt ist vorzugsweise ein Sauerstoffgehalt in einem Abgaskanal der Verbrennungsvorrichtung 1. Idealerweise ist der Sauerstoffgehalt einen Sauerstoffgehalt im Abgas 10, beispielsweise im Abgas 10 der Verbrennungsvorrichtung 1.

Eine erste vertikale Linie 28 in FIG 3 gibt ein Verbrennungsluftverhältnis und/oder eine Luftzahl λ an, unterhalb welchem oder unterhalb welcher die Emissionen 25 gemäss Kurve 26 kritisch werden. Insbesondere kann die vertikale Linie 28 ein Verbrennungsluftverhältnis und/oder eine Luftzahl λ angeben, unterhalb welchem oder unterhalb welcher die Emissionen 25 an Kohlenstoffmonoxid kritisch sind. Ferner kann die vertikale Linie 28 ein Verbrennungsluftverhältnis und/oder eine Luftzahl λ angeben, unterhalb welchem oder unterhalb welcher die Emissionen 25 einen der oben genannten kritischen Werte übersteigen. Weiterhin kann die vertikale Linie 28 ein Verbrennungsluftverhältnis und/oder eine Luftzahl λ angeben, unterhalb welchem oder unterhalb welcher die Emissionen 25 an Kohlenstoffmonoxid einen jener kritischen Werte übersteigen.

Eine zweite vertikale Linie 29 gibt eine ein weiteres Verbrennungsluftverhältnis und/oder eine weitere Luftzahl λ an. Das weitere Verbrennungsluftverhältnis und/oder die weitere Luftzahl λ ist gegenüber dem Verbrennungsluftverhältnis und/oder der Luftzahl λ entsprechend Linie 28 mit einem Faktor multipliziert worden. Jener Faktor ist vorzugsweise grösser als 1, speziell bevorzugt grösser als 1.02. Jener Faktor kann auch grösser als 1.05 sein. Ein grösserer Faktor schiebt das Verbrennungsluftverhältnis und/oder die Luftzahl λ gemäss Linie 28 deutlich in Richtung der unkritischen Emissionen gemäss Linie 29. Insbesondere kann ein grösserer Faktor das Verbrennungsluftverhältnis und/oder die Luftzahl λ gemäss Linie 28 deutlich in Richtung der unkritischen Emissionen an Kohlenstoffmonoxid gemäss Linie 29 schieben. Ferner kann ein grösserer Faktor das Verbrennungsluftverhältnis und/oder die Luftzahl λ gemäss Linie 28 deutlich in Richtung der Emissionen unterhalb des kritischen Wertes gemäss Linie 27 schieben.

Vorzugsweise ist jener Faktor kleiner oder gleich 1.41. Dabei entspricht ein Faktor von 1.41 einer Änderung im Wobbe-Index beim Wechsel von einem niederkalorischen Brennstoff zu einem höherkalorischen Brennstoff. Insbesondere entspricht der Faktor von 1.41 einer Änderung im Wobbe-Index beim Wechsel von einem niederkalorischen Brenngas zu einem höherkalorischen Brenngas. In einer speziellen Ausführungsform sind Wechsel von L-Gas zu E-Gas angedacht.

Mithin erkennt der Fachmann, dass der multiplikative Faktor, anhand dessen das Verbrennungsluftverhältnis und/oder die Luftzahl λ geändert wird, von den infrage kommenden Brennstoffen abhängt. Vorzugsweise erkennt der Fachmann, dass der multiplikative Faktor, anhand dessen das Verbrennungsluftverhältnis und/oder die Luftzahl λ geändert wird, von den infrage kommenden Brenngasen abhängt. Mithin kann der Faktor sowohl kleiner als auch grösser als der vorgenannte Wert sein.

Im Allgemeinen wird der Regelsollwert für den Normalbetrieb, welcher in FIG 3 als Linie 30 veranschaulicht ist, einen positiven Abstand von der Grenze gemäss Linie 28 haben. Das heisst, dass der Regelsollwert bei einem grösseren Verbrennungsluftverhältnis und/oder bei einer grösseren Luftzahl λ als ein unterer Grenzwert liegt. Reaktionen auf erwartbare Veränderungen aufgrund einer einzigen Störquelle, insbesondere des Brennstoffes, werden dadurch auf ein Verbrennungsluftverhältnis und/oder auf eine Luftzahl λ um den Regelsollwert im Normalbetrieb geführt. Reaktionen auf erwartbare Veränderungen aufgrund einer einzigen Störquelle, insbesondere des Brennstoffes, führen nicht einseitig zu einem höheren Verbrennungsluftverhältnis und/oder einer höheren Luftzahl λ.

Weiterhin berücksichtigt der Fachmann bei einem Sprung im Sollwert des Verbrennungsluftverhältnis und/oder der Luftzahl λ die Grenzen der Verbrennungsvorrichtung 1. Insbesondere wählt der Fachmann den multiplikativen Faktor, anhand dessen das Verbrennungsluftverhältnis und/oder die Luftzahl λ geändert wird, so, dass die Verbrennungsvorrichtung 1 weiterhin stabil arbeitet. Dabei ist vorgesehen, jenen multiplikativen Faktor so zu ändern, dass die Steuerung und/oder Regelung der Verbrennungsvorrichtung 1 stabil bleibt. Die Steuerung und/oder Regelung der Verbrennungsvorrichtung 1 soll insbesondere nicht oszillieren. In einer speziellen Ausführungsform kann die Steuerung und/oder Regelung die Verbrennungsvorrichtung 1 anhand mindestens eines Aktors 3, 4, 9 dauerhaft stabil steuern und/oder regeln.

Ferner ist vorgesehen, jenen multiplikativen Faktor so zu ändern, dass die Steuer- und/oder Regeleinrichtung 12 der Verbrennungsvorrichtung 1 stabil bleibt. Die Steuer- und/oder Regeleinrichtung 12 der Verbrennungsvorrichtung 1 soll insbesondere nicht oszillieren. Innerhalb jenes Bereiches kann die Steuer- und/oder Regeleinrichtung 12 die Verbrennungsvorrichtung 1 anhand mindestens eines Aktors 3, 4, 9 stabil steuern und/oder regeln. In einer speziellen Ausführungsform kann die Steuer- und/oder Regeleinrichtung 12 anhand mindestens eines Aktors 3, 4, 9 dauerhaft stabil steuern und/oder regeln.

Weiterhin wird der multiplikative Faktor, anhand dessen das Verbrennungsluftverhältnis und/oder die Luftzahl λ geändert wird, so gewählt, dass kein Flammenabriss in der Verbrennungsvorrichtung 1 provoziert wird. Insbesondere wird der multiplikative Faktor so gewählt, dass kein Flammenabriss im Feuerraum 2 der Verbrennungsvorrichtung 1 provoziert wird. Darüber hinaus kann der multiplikative Faktor so gewählt werden, dass kein Flammenabriss am Feuerraum 2 der Verbrennungsvorrichtung 1 provoziert wird.

Gemäss einer speziellen Ausführungsform wird der multiplikative Faktor, anhand dessen das Verbrennungsluftverhältnis und/oder die Luftzahl λ geändert wird, so gewählt, dass kein Flammenabriss in der Verbrennungsvorrichtung 1 vorkommt. Insbesondere wird der multiplikative Faktor so gewählt, dass kein Flammenabriss im Feuerraum 2 der Verbrennungsvorrichtung 1 vorkommt. Darüber hinaus kann der multiplikative Faktor so gewählt werden, dass kein Flammenabriss am Feuerraum 2 der Verbrennungsvorrichtung 1 vorkommt.

Im Fall einer raschen Veränderung, beispielsweise infolge eines Wechsels eines Brenngases, reagiert gemäss der vorliegenden Offenbarung die Steuer- und/oder Regeleinrichtung 12. Eine solche rasche Veränderung kann unter anderem durch einen Wechsel auf ein höherkalorisches Brenngas bewirkt werden. Die Steuer- und/oder Regeleinrichtung 12 erhält demnach ein Signal, beispielsweise ein Signal eines Verbrennungssensors 18. Sie verarbeitet jenes Signal zu einem ersten Messwert des Verbrennungsluftverhältnisses und/oder der Luftzahl λ und/oder des Sauerstoffgehaltes. Die Steuer- und/oder Regeleinrichtung 12 prüft anschliessend durch einen Vergleich, ob das Verbrennungsluftverhältnis und/oder die Luftzahl λ und/oder der Sauerstoffgehalt unter der Grenze gemäss Linie 28 liegt. Ist solches der Fall, wird der Sollwert des Verbrennungsluftverhältnisses und/oder der Luftzahl λ oder der Grenzwert gemäss Linie 28 mit einem der vorgenannten Faktoren multipliziert. Es kann auch der Messwert des Verbrennungsluftverhältnisses und/oder der Luftzahl λ mit einem der vorgenannten Faktoren multipliziert werden.

Wird der multiplikativen Faktor auf den Regelsollwert im Normalbetrieb angewendet, kann zusätzlich das Verhältnis aus Grenzwert zu Regelsollwert im Normalbetrieb eingerechnet werden. Das heisst, dass der multiplikative Faktor vermindert wird. Anschliessend regelt die Steuer- und/oder Regeleinrichtung 12 die Verbrennungsvorrichtung auf den durch Multiplikation erhaltenen Sollwert des Verbrennungsluftverhältnisses und/oder der Luftzahl λ. Die Steuer- und/oder Regeleinrichtung 12 kann auf den durch Multiplikation erhaltenen Sollwert des Verbrennungsluftverhältnisses und/oder der Luftzahl λ beispielsweise anhand mindestens eines Aktors 3, 4, 9 regeln.

In einer anderen Ausführungsform prüft die Steuer- und/oder Regeleinrichtung 12 ebenfalls, ob das Verbrennungsluftverhältnis und/oder die Luftzahl λ unter der Grenze gemäss Linie 28 liegt. Vorzugsweise führt die Steuer- und/oder Regeleinrichtung 12 dazu einen Vergleich des gemessenen Verbrennungsluftverhältnisses und/oder der gemessenen Luftzahl λ mit der Grenze gemäss Linie 28 durch. Ist solches der Fall, wird zum Sollwert des Verbrennungsluftverhältnisses und/oder der Luftzahl λ und/oder zum Grenzwert gemäss Linie 28 ein Summand addiert.

Jener Summand ist vorzugsweise grösser als 0, speziell bevorzugt grösser als 0.02. Jener Summand kann auch grösser als 0.05 sein. Ein grösserer Summand schiebt das Verbrennungsluftverhältnis und/oder die Luftzahl λ gemäss Linie 28 deutlich in Richtung der unkritischen Emissionen gemäss Linie 29. Insbesondere kann ein grösserer Summand das Verbrennungsluftverhältnis und/oder die Luftzahl λ gemäss Linie 28 deutlich in Richtung der unkritischen Emissionen an Kohlenstoffmonoxid gemäss Linie 29 schieben. Ferner kann ein grösserer Summand das Verbrennungsluftverhältnis und/oder die Luftzahl λ gemäss Linie 28 deutlich in Richtung der Emissionen unterhalb des kritischen Wertes gemäss Linie 27 schieben.

Im Anschluss an die Addition regelt die Steuer- und/oder Regeleinrichtung 12 die Verbrennungsvorrichtung auf den durch Addition erhaltenen Sollwert des Verbrennungsluftverhältnisses und/oder der Luftzahl λ. Die Steuer- und/oder Regeleinrichtung 12 kann auf den durch Addition erhaltenen Sollwert des Verbrennungsluftverhältnisses und/oder der Luftzahl λ beispielsweise anhand mindestens eines Aktors 3, 4, 9 regeln.

In einer weiteren Ausführungsform prüft die Steuer- und/oder Regeleinrichtung 12 ebenfalls, ob das Verbrennungsluftverhältnis und/oder die Luftzahl λ unter der Grenze gemäss Linie 28 liegt. Ist solches der Fall, wird der Sollwert auf einen, für diesen Fall, hinterlegten festen Wert gesetzt. Anschliessend regelt die Steuer- und/oder Regeleinrichtung 12 die Verbrennungsvorrichtung 1 auf den gesetzten Sollwert des Verbrennungsluftverhältnisses und/oder der Luftzahl λ. Die Steuer- und/oder Regeleinrichtung 12 kann auf den gesetzten Sollwert des Verbrennungsluftverhältnisses und/oder der Luftzahl λ beispielsweise anhand mindestens eines Aktors 3, 4, 9 regeln.

Infolge der Steuerung und/oder Regelung auf den rechnerisch erhaltenen oder gesetzten Sollwert sind mehrere Fälle zu unterscheiden. Zunächst kann es vorkommen, dass die rasche Veränderung vorübergehender Natur ist. Insbesondere kann es sich bei der raschen Veränderung um eine Störung handeln. Im Falle einer Störung findet keine Änderung des Brennstoffes und/oder des Brennstoffgemisches und/oder der Brennstoffzusammensetzung und/oder anderer Umgebungsbedingungen statt. In einem solchen Fall ergeben sich Emissionen 25 infolge der Steuerung und/oder Regelung auf den rechnerisch erhaltenen Sollwert entsprechend des Schnittpunktes von Kurve 26 und Linie 29. Die Emissionen 25 sind unterhalb der kritischen Emissionen gemäss Linie 27. Insbesondere können die Emissionen 25 unterhalb des durch Linie 27 bezeichneten kritischen Wertes liegen. Ferner können die Emissionen 25 an Kohlenstoffmonoxid unterhalb der kritischen Emissionen gemäss Linie 27 sein. Weiterhin können die Emissionen 25 an Kohlenstoffmonoxid unterhalb des durch Linie 27 bezeichneten kritischen Wertes liegen.

Ferner kann es vorkommen, dass die rasche Veränderung andauert. Beispielsweise kann ein dauerhafter Wechsel von einem niederkalorischen Brenngas zu einem höherkalorischen Brenngas vorliegen. Ferner kann ein dauerhafter Wechsel vom niederkalorischsten Brenngas zum höchstkalorischsten Brenngas innerhalb des durch den Faktor abgedeckten Bereiches vorliegen. In jenen Fällen liegen infolge der Steuerung und/oder Regelung die Emissionen 25 am Schnittpunkt von Kurve 26 und Linie 28. Die Emissionen 25 sind an oder unterhalb der kritischen Emissionen gemäss Linie 27. Insbesondere können die Emissionen 25 an oder unterhalb des durch Linie 27 bezeichneten kritischen Wertes liegen. Ferner können die Emissionen 25 an Kohlenstoffmonoxid an oder unterhalb der kritischen Emissionen gemäss Linie 27 sein. Weiterhin können die Emissionen 25 an Kohlenstoffmonoxid an oder unterhalb des durch Linie 27 bezeichneten kritischen Wertes liegen.

Weiterhin kann ein rascher Wechsel von einem niederkalorischen Brenngas zu einem Brenngas im mittleren Bereich vorkommen. Diese Veränderung führt infolge der Steuerung und/oder Regelung zu einem Zustand, dessen Emissionen 25 einem Verbrennungsluftverhältnis und/oder einer Luftzahl λ zwischen den Linien 28 und 29 entsprechen. Die Emissionen 25 sind wiederum unterhalb der kritischen Emissionen gemäss Linie 27. Insbesondere können die Emissionen 25 unterhalb des durch Linie 27 bezeichneten kritischen Wertes liegen. Ferner können die Emissionen 25 an Kohlenstoffmonoxid unterhalb der kritischen Emissionen gemäss Linie 27 sein. Weiterhin können die Emissionen 25 an Kohlenstoffmonoxid unterhalb des durch Linie 27 bezeichneten kritischen Wertes liegen.

Gemäss einer Variante der vorliegenden Offenbarung reagiert die Steuer- und/oder Regeleinrichtung 12 auf eine rasche Veränderung durch einen direkten Eingriff in mindestens einen ersten Aktor 3, 4, 9. Dabei bleibt der Regelsollwert unverändert. Eine solche rasche Veränderung kann unter anderem als Reaktion auf einen Wechsel auf ein höherkalorisches Brenngas bewirkt werden. Die Steuer- und/oder Regeleinrichtung 12 erhält demnach ein Signal, beispielsweise ein Signal eines Verbrennungssensors 18. Sie verarbeitet jenes Signal zu einem ersten Messwert des Verbrennungsluftverhältnisses und/oder der Luftzahl λ. Die Steuer- und/oder Regeleinrichtung 12 prüft anschliessend durch einen Vergleich, ob das Verbrennungsluftverhältnis und/oder die Luftzahl λ unter der Grenze gemäss Linie 28 liegt. Ist solches der Fall, wird ein Signal an mindestens einen der Aktoren 3, 4, 9 generiert. Im Falle eines Luftaktors 3, 4 beinhaltet jenes Signal eine Erhöhung der Luftzufuhr um einen Faktor. Im Falle eines Brennstoffaktors 9 beinhaltet jenes Signal eine Verringerung der Brennstoffzufuhr, insbesondere der Zufuhr an Brenngas, um diesen Faktor. Das Signal wird an den mindestens eine Aktor 3, 4, 9 gesendet. Der Aktor 3, 4, 9 empfängt das Signal. Im Falle eines Luftaktors 3, 4 erhöht der Luftaktor 3, 4 als Antwort auf das Signal die Luftzufuhr um jenen Faktor. Im Falle eines Brennstoffaktors 9 verringert der Brennstoffaktor 9 als Antwort auf das Signal die Brennstoffzufuhr um jenen Faktor.

Ferner kann je ein Signal an mehr als einen Aktor 3, 4, 9 gesendet werden. So wird ein erstes Signal an mindestens einen Luftaktor 3, 4 generiert. Zusätzlich wird ein zweites Signal an mindestens einen Brennstoffaktor 9 generiert. Das erste Signal beinhaltet eine Erhöhung der Luftzufuhr. Das zweite Signal beinhaltet eine Verringerung der Brennstoffzufuhr, insbesondere der Brenngaszufuhr. Der kombinierte Effekt aus Erhöhung der Luftzufuhr gemäss dem ersten Signal und Verringerung der Brennstoffzufuhr, insbesondere der Brenngaszufuhr, bewirkt eine Erhöhung des Verbrennungsluftverhältnisses und/oder der Luftzahl λ. Die Erhöhung des Verbrennungsluftverhältnisses und/oder der Luftzahl λ erfolgt um jenen vorgenannten Faktor.

Darüber hinaus kann je ein Signal an mehr als einen Luftaktor 3, 4 gesendet werden. So wird ein drittes Signal an mindestens einen ersten Luftaktor 3, 4 generiert. Zusätzlich wird ein viertes Signal an mindestens einen zweiten Luftaktor 4, 3 generiert. Das dritte Signal beinhaltet eine Erhöhung der Luftzufuhr durch den ersten Luftaktor 3, 4. Das vierte Signal beinhaltet ebenfalls eine Erhöhung der Luftzufuhr durch den zweiten Luftaktor 4, 3. Der kombinierte Effekt aus Erhöhung der Luftzufuhr gemäss dem dritten Signal und Erhöhung der Luftzufuhr gemäss dem vierten Signal bewirkt eine Erhöhung des Verbrennungsluftverhältnisses um jenen vorgenannten Faktor. Der kombinierte Effekt aus Erhöhung der Luftzufuhr gemäss dem dritten Signal und Erhöhung der Luftzufuhr gemäss dem vierten Signal kann auch eine Erhöhung der Luftzahl λ um jenen vorgenannten Faktor bewirken.

Weiterhin ist ein gemischter gesteuerter und geregelter Betrieb möglich. Die Steuer- und/oder Regeleinrichtung 12 generiert zunächst einen Sollwert für eine Luftzufuhr durch den Luftzufuhrkanal 11 auf Basis jenes vorgenannten Faktors. Die Steuer- und/oder Regeleinrichtung 12 erzeugt anschliessend ein Sollwertsignal für eine Luftzufuhr durch den Luftzufuhrkanal 11 auf Basis des Sollwertes für die Luftzufuhr durch den Luftzufuhrkanal 11. Auf Basis des Sollwertsignales für die Luftzufuhr wird ein fünftes Signal an mindestens einen ersten Luftaktor 3, 4 generiert. Wahlweise kann das fünfte Signal auch auf Basis des Sollwertes für die Luftzufuhr durch den Luftzufuhrkanal 11 generiert werden. Die Steuer- und/oder Regeleinrichtung 12 sendet das fünfte Signal an den mindestens einen ersten Luftaktor 3, 4.

Der erste Luftaktor 3, 4 empfängt das fünfte Signal. Der erste Luftaktor 3, 4 stellt eine Luftzufuhr gemäss dem fünften Signal ein, wird also gesteuert. Weiterhin empfängt die Steuer- und/oder Regeleinrichtung 12 ein Signal von einem Sensor 20 im Luftzufuhrkanal 11. Die Steuer- und/oder Regeleinrichtung 12 generiert aus dem Signal vom Sensor 20 im Luftzufuhrkanal 11 und dem Sollwertsignal für die Luftzufuhr ein erstes Regelsignal. Wahlweise kann die Steuer- und/oder Regeleinrichtung 12 auch aus dem Signal vom Sensor 20 im Luftzufuhrkanal 11 und dem Sollwert für die Luftzufuhr ein erstes Regelsignal generieren.

Die Steuer- und/oder Regeleinrichtung 12 sendet das erste Regelsignal an mindestens einen zweiten Luftaktor 4, 3. Die Steuer- und/oder Regeleinrichtung 12 regelt anhand des zweiten Luftaktors 4, 3 die Luftzufuhr durch den Luftzufuhrkanal 11 auf das Sollwertsignal für die Luftzufuhr durch den Luftzufuhrkanal 11. Vorzugsweise sind der mindestens eine erste Luftaktor 3, 4 und der mindestens eine zweite Luftaktor 4, 3 in Reihe angeordnet. Die Kombination aus Steuerung des ersten Luftaktors 3, 4 und Regelung des zweiten Luftaktors 4, 3 bewirkt eine Erhöhung des Verbrennungsluftverhältnisses und/oder der Luftzahl λ um jenen vorgenannten Faktor.

Ferner ist ein gemischter gesteuerter und geregelter Betrieb unter Einbezug mindestens eines Brennstoffaktors 9 und mindestens eines Luftaktors 3, 4 möglich. Die Steuer- und/oder Regeleinrichtung 12 generiert zunächst einen Sollwert auf Basis jenes vorgenannten Faktors. Anschliessend erzeugt die Steuer- und/oder Regeleinrichtung 12 ein sechstes Signal auf Basis des generierten Sollwertes. Die Steuer- und/oder Regeleinrichtung 12 sendet das sechste Signal an den mindestens einen Brennstoffaktor 9.

Der mindestens eine Brennstoffaktor 9 empfängt das sechste Signal. Der mindestens eine Brennstoffaktor 9 stellt eine Brennstoffzufuhr, insbesondere eine Brenngaszufuhr, gemäss dem sechsten Signal ein, wird also gesteuert. Weiterhin empfängt die Steuer- und/oder Regeleinrichtung 12 ein Signal von einem Sensor 20 im Luftzufuhrkanal 11. Die Steuer- und/oder Regeleinrichtung 12 erzeugt aus dem Signal vom Sensor 20 im Luftzufuhrkanal 11 und dem generierten Sollwert ein zweites Regelsignal.

Die Steuer- und/oder Regeleinrichtung 12 sendet das zweite Regelsignal an den mindestens einen Luftaktor 3, 4. Die Steuer- und/oder Regeleinrichtung 12 regelt anhand des mindestens einen Luftaktors 3, 4 die Luftzufuhr durch den Luftzufuhrkanal 11. Die Kombination aus Steuerung des Brennstoffaktors 9 und Regelung des Luftaktors 3, 4 bewirkt eine Erhöhung des Verbrennungsluftverhältnisses und/oder der Luftzahl λ um jenen vorgenannten Faktor.

Ferner sind folgende gemischte gesteuerte und geregelte Betriebsmodi möglich:
- Steuerung des mindestens einen Luftaktors 3, 4 und Regelung des mindestens einen Brennstoffaktors 9; das Regelsignal wird aus dem Signal vom Sensor 22 und dem generierten Sollwert erzeugt.
- Steuerung mindestens eines Aktors 3, 4, 9 und im Anschluss die Regelung und/oder Feinregelung des mindestens einen Aktors 3, 4, 9. Dabei wird das Regelsignal aus dem Signal von Sensor 20 und/oder 22 und dem generierten Sollwert erzeugt.

Infolge der Verletzung eines Grenzwertes ändert die Steuerung und/oder die Regelung die Ansteuerungssignale der Aktoren stärker und/oder deutlicher als aufgrund der Regelung im Normalbetrieb. Allgemein ändert infolge der Verletzung eines Grenzwertes die Steuerung und/oder die Regelung die Signale an die Aktoren stärker und/oder deutlicher als aufgrund der Regelung im Normalbetrieb. Mithin ist das Verbrennungsluftverhältnis und/oder die Luftzahl λ durch die Änderung sofort in den Bereich zwischen den Linien 28 und 29 geführt. Solches gilt bei Veränderungen innerhalb des durch den Faktor abgedeckten Bereiches. Im Messsignal des Verbrennungssensors 18 wird dies jedoch erst nach Ablauf der Tot- und Verzögerungszeit der Verbrennungsvorrichtung 1 vollständig zu sehen sein.

Aus diesem Grund wird die Steuerung und/oder Regelung so konfiguriert, dass nach einer erkannten Verletzung eines Grenzwertes der Eingriff nur einmalig erfolgt. Anschliessend werden derart starke gleichgerichtete Reaktionen für die Dauer gesperrt, bis der Messwert wieder den Grenzwert einhält, der verletzt wurde. Dies sollte spätestens nach Ablauf der Tot- und Verzögerungszeit der Verbrennungsvorrichtung 1 der Fall sein. Dies ist nicht der Fall, wenn die Veränderung im Verbrennungsluftverhältnis und/oder der Luftzahl λ grösser ist als durch den Faktor abgedeckt. Nach Ablauf der Tot- und Verzögerungszeit der Verbrennungsvorrichtung 1 wird in jedem Fall wieder die normale Regelung freigegeben.

Eine Sperrung weiterer gleichgerichteter Reaktionen kann auch indirekt bewirkt werden. Bei bekannter Auswirkung einer Änderung der Ansteuerung des Aktors bzw. der Aktoren auf die Zuführungsmenge im entsprechenden Kanal kann daraus die erreichte Änderung der Verbrennungswerte errechnet werden. Diese Änderung der Verbrennungswerte wird in der Folgezeit auf die nächsten Messwerte des Verbrennungssensors 18 hinzugerechnet. Es ist möglich, dass die Tot- und/oder Verzögerungszeit der Verbrennungsvorrichtung 1 bekannt ist bzw. sie ist ermittelt worden. Mithin ist auch bekannt, wann und/oder in welcher Form die Änderung der Verbrennungswerte im Messsignal sichtbar wird. Entsprechend ist dann der Hinzurechnungsbetrag zum Messwert zu reduzieren. Der so errechnete bzw. korrigierte Messwert wird in der Folge mit dem durch Multiplikation oder Summation erhaltenen oder dem gesetzten Sollwert verglichen. Damit werden nur noch weitere, zusätzliche Veränderungen als Regelungsabweichung in den nächsten Abtastschritten berücksichtigt und korrigiert.

Idealerweise wird auch der durch Multiplikation oder Summation erhaltene oder der gesetzte Sollwert nach einer Verletzung des Grenzwertes nicht konstant gehalten. Stattdessen wird der erhaltene Sollwert umgehend wieder entsprechend der Tot- und/oder Verzögerungszeit der Verbrennungsvorrichtung auf den Regelsollwert im Normalbetrieb zurückgeführt. Die Verletzung eines Grenzwertes durch das Messignal bedeutet, dass die Ursache der Veränderung des Verbrennungsprozesses schon einige Zeit zurückliegt. Jene Zeit entspricht mindestens der Tot- und/oder Verzögerungszeit der Verbrennungsvorrichtung 1. Daher ist es günstig, den Regelsollwert nur noch mit der Tot- und/oder Verzögerungszeit auf den Regelsollwert im Normalbetrieb zurückzuführen. Auf diese Weise werden Überreaktionen minimiert.

Hält das unkorrigierte Messsignal wieder den zuvor verletzten Grenzwert ein, kann der Regelsollwert wieder auf den Sollwert für den Normalbetrieb gesetzt werden. Da man in jedem Fall unterhalb kritischer Verbrennungswerte ist, kann die noch verbleibende Regeldifferenz mit der im Normalbetrieb gegebenen Reaktionsgeschwindigkeit ausgeglichen werden.

Sollte bei einem der Steuer- und/oder Regelschritte der Fall eintreten, dass ein Aktor dem Ansteuerungssignal nicht vollständig folgen kann, sind folgende Strategien denkbar. Man teilt die Veränderung auf mehrere Aktoren auf bzw. wählt eine andere Verteilung, damit jeder Aktor der neu bestimmten Ansteuerung folgen kann. Falls dies nicht möglich oder von der Regelstrategie gewollt ist, muss die Änderung der Ansteuerung dieses Aktors in mehrere Schritte aufgeteilt werden. Diese Aufteilung verlängert jedoch die Reaktionszeit der Steuer- und/oder Regelung.

Gemäss einer speziellen Ausführungsform wird die Steuer- und/oder Regeleinrichtung 12 anhand einer weiteren Recheneinheit 31 optimiert. Die weitere Recheneinheit 31 ist entfernt von der Steuer- und/oder Regeleinrichtung 12 angeordnet. Beispielsweise ist die weitere Recheneinheit 31 mindestens einen Kilometer, mindestens zwei Kilometer, oder mindestens fünf Kilometer, von der Steuer- und/oder Regeleinrichtung 12 angeordnet.

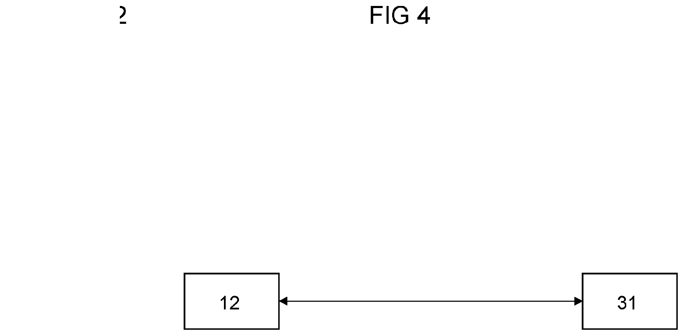

Die Steuer- und/oder Regeleinrichtung 12 und die weitere Recheneinheit 31 sind anhand einer bidirektionalen Datenverbindung miteinander gekoppelt. Beispielsweise können die Steuer- und/oder Regeleinrichtung 12 und die weitere Recheneinheit 31 anhand einer Internetverbindung miteinander gekoppelt sein. Eine entsprechende Anordnung veranschaulicht FIG 4. Vorzugsweise ist die Internetverbindung zwischen der Steuer- und/oder Regeleinrichtung 12 und der weiteren Recheneinheit 31 verschlüsselt, beispielsweise anhand eines Diffie-Hellman Schlüsselaustausches.

Die Steuer- und/oder Regeleinrichtung 12 sendet Signale des Verbrennungssensors 18 an die weitere Recheneinheit 31. Wahlweise kann die Steuer- und/oder Regeleinrichtung 12 auch Messwerte, welche aus den Signalen des Verbrennungssensors 18 gewonnen werden, an die weitere Recheneinheit 31 senden. Es ist möglich, dass die weitere Recheneinheit 31 Signale des Verbrennungssensors 18 und/oder Messwerte aus dem Verbrennungssensor 18 von mehreren Verbrennungsvorrichtungen 1 empfängt. Beispielsweise kann die weitere Recheneinheit 31 von mindestens einhundert, von mindestens zweihundert, oder gar von mindestens fünfhundert solchen Verbrennungsvorrichtungen Signale und/oder Messwerte empfangen.

Die weitere Recheneinheit 31 ermittelt aus den empfangenen Signalen und/oder Messwerten geeignete Faktoren zur rechnerischen Änderung des Verbrennungsluftverhältnisses und/oder der Luftzahl λ. Die weitere Recheneinheit 31 kann dazu beispielsweise ein neuronales Netz und/oder eine Fuzzy-Logik und/oder ein statistisches Verfahren einsetzen.

Die weitere Recheneinheit 31 übermittelt mindestens einen geeigneten Faktor an die Steuer- und/oder Regeleinrichtung 12. Die Steuer- und/oder Regeleinrichtung 12 empfängt den mindestens einen geeigneten Faktor.

Die weitere Recheneinheit 31 umfasst vorzugsweise einen Microcontroller. Die weitere Recheneinheit 31 umfasst idealerweise einen Microprozessor. Die weitere Recheneinheit 31 kann eine Regeleinrichtung sein. Vorzugsweise umfasst die Regeleinrichtung einen Microcontroller. Die Regeleinrichtung umfasst idealerweise einen Microprozessor. Die Regeleinrichtung kann einen proportionalen und integralen Regler umfassen. Ferner kann die Regeleinrichtung einen proportionalen und integralen und derivativen Regler umfassen.

Die Steuer- und/oder Regeleinrichtung 12 kann den Faktor zur Bestimmung eines Sollwertes für ein Signal des Verbrennungssensors 18 oder für einen Messwert aus dem Verbrennungssensor 18 einsetzen. In diesem Fall erfolgt die Änderung des Verbrennungsluftverhältnisses und/oder der Luftzahl λ indirekt über eine Regelung auf einen um den Faktor korrigierten Sollwert. Die Steuer- und/oder Regeleinrichtung 12 kann den mindestens einen geeigneten Faktor auch als Grundlage eines direkten Eingriffes in mindestens einen ersten Aktor 3, 4, 9 nutzen. Das heisst, dass die Steuer- und/oder Regeleinrichtung 12 durch direkten Eingriff in den mindestens einen ersten Aktor 3, 4, 9 ein Verbrennungsluftverhältnis und/oder eine Luftzahl λ und/oder einen Sauerstoffgehalt ändert. Jene Änderung erfolgt als Funktion des mindestens einen geeigneten Faktors.

Teile einer Steuer- und/oder Regeleinrichtung 12 gemäss der vorliegenden Offenbarung können als Hardware und/oder als Softwaremodul ausgeführt werden. Das Softwaremodul wird dabei von einer Recheneinheit gegebenenfalls unter Hinzunahme von Containervirtualisierung ausgeführt. Ferner besteht die Möglichkeit der Ausführung anhand eines Cloud-Rechners und/oder anhand einer Kombination der vorgenannten Möglichkeiten. Die Software mag eine Firmware und/oder einen Hardware-Treiber, der innerhalb eines Betriebssystems ausgeführt wird und/oder eine ContainerVirtualisierung und/oder ein Anwendungsprogramm umfassen. Die vorliegende Offenbarung bezieht sich also auch auf ein Rechnerprogrammprodukt, welches die Merkmale dieser Offenbarung enthält bzw. die erforderlichen Schritte ausführt. Bei Realisierung als Software können die beschriebenen Funktionen gespeichert werden als ein oder mehrere Befehle auf einem rechnerlesbaren Medium. Einige Beispiele rechnerlesbarer Medien schliessen Arbeitsspeicher (RAM) und/oder magnetischen Arbeitsspeicher (MRAM) und/oder ausschliesslich lesbaren Speicher (ROM) und/oder Flash-Speicher und/oder elektronisch programmierbares ROM (EPROM) ein. Einige weitere Beispiele rechnerlesbarer Medien schliessen elektronisch programmierbares und löschbares ROM (EEPROM) und/oder Register einer Recheneinheit und/oder eine Festplatte und/oder eine auswechselbare Speichereinheit ein. Darüber hinaus schliessen rechnerlesbare Medien einen optischen Speicher und/oder jegliches geeignete Medium ein, auf welches durch einen Rechner oder durch andere IT-Vorrichtungen und Anwendungen zugegriffen werden kann.

Mit anderen Worten, die vorliegende Erfindung lehrt eine Einrichtung (12) zur Steuerung und/oder Regelung einer Verbrennungsvorrichtung (1) nach Anspruch 1.

Die Steuer- und/oder Regeleinrichtung (12) hat zumindest lesenden Zugriff auf den Speicher. Ein ausschliesslich lesbarer, aber nicht beschreibbarer, Speicher verschafft Schutz des Systems vor Manipulationen an der Steuer- und/oder Regeleinrichtung (12). Ein Speicher mit Lese- und Schreibzugriff ermöglicht hingegen Konfigurationsänderungen im Betrieb. Der Speicher der Steuer- und/oder Regeleinrichtung (12) ist ein nicht-flüchtiger Speicher.

Infolge des Sendens des ersten Ausgabesignales an den mindestens einen ersten Aktor (3, 4, 9) bewirkt der mindestens eine Aktor (3, 4, 9) eine Veränderung mindestens eine Grösse in einem Abgas der Verbrennungsvorrichtung (1). Die mindestens eine Grösse im Abgas der Verbrennungsvorrichtung (1) ist vorzugsweise ausgewählt aus
- einem Verbrennungsluftverhältnis,
- einer Luftzahl λ,
- einem Sauerstoffgehalt
im Abgas der Verbrennungsvorrichtung (1).

### Bezugszeichen

1: Verbrennungsvorrichtung
2: Feuerraum
3: Gebläse mit (optional) veränderlicher Drehzahl
4: Luftklappe mit Stellantrieb
5: Verbrennungsluft
6: Brennstoff für Verbrennung bzw. Brennstoffzufuhrkanal
7: Sicherheitsabsperrventil
8: Sicherheitsabsperrventil
9: Brennstoffaktor mit Stellantrieb zur Veränderung der Brennstoffzufuhr
10: Abgas
11: Luftzufuhrkanal
12: Steuer- und/oder Regeleinrichtung
13: Steuersignal für Luftklappe (Stellwinkel)
14: Ansteuersignal für Gebläsedrehzahl (optional)
15: Auf-/Zu-Signal für Sicherheitsabsperrventil
16: Auf-/Zu-Signal für Sicherheitsabsperrventil
17: Steuersignal für Brennstoffaktor (beispielsweise Stellwinkel/Schritt-Stellung/etc.)
18: Sensor zur Erfassung der Luftzahl λ (Sauerstoffsensor, etc.)
19: Messsignal vom Luftzahlsensor zur Erfassung der Luftzahl
20: Sensor zur Erfassung der Luftzufuhr

### (Drehzahlsensor/Volumenstromsensor/Massenstromsensor/etc.)

21: Messsignal vom Luftzufuhrsensor
22: Sensor zur Erfassung der Brennstoffzufuhr (Volumenstromsensor/Massenstromsensor/etc.)
23: Messsignal vom Brennstoffzufuhrsensor
24: Achse für das Verbrennungsluftverhältnis und/oder Luftzahl λ und/oder Sauerstoffgehalt
25: Achse für Emissionen
26: Kurve Emissionen, beispielsweise Kohlenstoffmonoxid, über Verbrennungsluftverhältnis und/oder Luftzahl λ und/oder Sauerstoffgehalt
27: Schwelle kritischer Emissions-/Kohlenstoffmonoxidwerte
28: kritisches Verbrennungsluftverhältnis und/oder kritische Luftzahl λ und/oder kritischer Sauerstoffgehalt = Grenzwert
29: Verbrennungsluftverhältnis und/oder Luftzahl λ und/oder Sauerstoffgehalt: Regelsollwert nach Unterschreitung des Grenzwertes
30: Verbrennungsluftverhältnis und/oder Luftzahl λ und/oder Sauerstoffgehalt: Regelsollwert im Normalbetrieb
31: weitere Recheneinheit

## Patentansprüche

1. Einrichtung (12) zur Steuerung und/oder Regelung einer Verbrennungsvorrichtung (1), die Steuer- und/oder Regeleinrichtung (12) umfassend einen nicht-flüchtigen Speicher, in dem mindestens ein Grenzwert und mindestens ein Faktor und/oder ein hinterlegter Korrekturwert hinterlegt sind, wobei die Einrichtung (12) mit mindestens einem ersten Sensor (18) und mit mindestens einem ersten Aktor (3, 4, 9) kommunikativ verbindbar ist, wobei der mindestens eine erste Aktor (3, 4, 9) aus einem Gebläse (3), einer Luftklappe (4) mit Stellantrieb und einem Brennstoffaktor (9) mit Stellantrieb zur Veränderung einer Brennstoffzufuhr ausgewählt ist, und wobei die Einrichtung (12) ausgebildet ist:
ein erstes Eingangssignal von dem mindestens einen ersten Sensor (18) zu empfangen;
das erste Eingangssignal zu einem ersten Messwert, welcher ein Verbrennungsluftverhältnis und/oder eine Luftzahl λ und/oder einen Sauerstoffgehalt angibt, zu verarbeiten;
den mindestens einen Grenzwert aus dem nicht-flüchtigen Speicher zu laden und den ersten Messwert mit dem mindestens einen Grenzwert zu vergleichen;
falls der erste Messwert kleiner als der mindestens eine Grenzwert ist oder grösser als der mindestens eine Grenzwert ist, einen hervorgebrachten Korrekturwert auf genau einem der nachfolgenden Wege i oder ii hervorzubringen:
i. den mindestens einen Faktor aus dem Speicher zu laden und den hervorgebrachten Korrekturwert als Funktion des mindestens einen Grenzwertes und als Funktion des mindestens einen Faktors und als Funktion des ersten Messwertes rechnerisch zu bestimmen;
ii. den hinterlegten Korrekturwert aus dem nicht-flüchtigen Speicher zu laden;
ein erstes Ausgabesignal als Funktion des hinterlegten Korrekturwertes zu erzeugen und das erste Ausgabesignal an den mindestens einen ersten Aktor (3, 4, 9) zu senden.

2. Die Einrichtung (12) gemäss Anspruch 1, wobei die Einrichtung (12) ausgebildet ist:
das erste Ausgabesignal als ausschliessliche Funktion des bestimmten oder hinterlegten Korrekturwertes und/oder als Funktion aktueller Ausgabesignale zu erzeugen.

3. Die Einrichtung (12) gemäss Anspruch 1, wobei das erste Ausgabesignal ein erstes Regelsignal ist und die Einrichtung (12) ausgebildet ist:
das erste Regelsignal als Funktion des bestimmten oder hinterlegten Korrekturwertes und als Funktion mindestens einer Grösse ausgewählt aus:
- dem ersten Eingangssignal,
- dem ersten Messwert
zu bestimmen; und
das erste Regelsignal an den mindestens einen ersten Aktor (3, 4, 9) zu senden.

4. Die Einrichtung (12) gemäss einem der Ansprüche 1 bis 3, wobei der mindestens eine Faktor grösser als eins ist und der mindestens eine Grenzwert mindestens ein unterer Grenzwert ist und die Einrichtung (12) ausgebildet ist:
falls der erste Messwert kleiner als der mindestens eine untere Grenzwert ist:
den Korrekturwert durch Vervielfachung des ersten Messwertes oder durch Vervielfachung des mindestens einen unteren Grenzwertes gemäss dem mindestens einen Faktor rechnerisch zu bestimmen.

5. Die Einrichtung (12) gemäss einem der Ansprüche 1 bis 3, wobei der mindestens eine Faktor grösser als eins ist und der mindestens eine Grenzwert mindestens ein oberer Grenzwert ist und die Einrichtung (12) ausgebildet ist:
falls der erste Messwert grösser als der mindestens eine obere Grenzwert ist:
den Korrekturwert durch Division des ersten Messwertes oder des mindestens einen oberen Grenzwertes durch den mindestens einen Faktor rechnerisch zu bestimmen.

6. Die Einrichtung (12) gemäss einem der Ansprüche 1 bis 3, wobei der mindestens eine Faktor grösser als null ist und der mindestens eine Grenzwert mindestens ein unterer Grenzwert ist und die Einrichtung (12) ausgebildet ist:
falls der erste Messwert kleiner als der mindestens eine untere Grenzwert ist:
den Korrekturwert durch Vermehrung des ersten Messwertes oder durch Vermehrung des mindestens einen unteren Grenzwertes um den mindestens einen Faktor rechnerisch zu bestimmen.

7. Die Einrichtung (12) gemäss einem der Ansprüche 1 bis 3, wobei der mindestens eine Faktor grösser als null ist und der mindestens eine Grenzwert mindestens ein oberer Grenzwert ist und die Einrichtung (12) ausgebildet ist:
falls der erste Messwert grösser als der mindestens eine obere Grenzwert ist:
den Korrekturwert durch Verminderung des ersten Messwertes oder durch Verminderung des mindestens einen oberen Grenzwertes um den mindestens einen Faktor rechnerisch zu bestimmen.

8. Die Einrichtung (12) gemäss einem der Ansprüche 1 bis 7, wobei im Speicher zusätzlich eine Zuordnung von Korrekturwerten und/oder aktueller Ausgabesignale zu ersten Ausgabesignalen hinterlegt ist, wobei die Einrichtung (12) zusätzlich mit mindestens einem zweiten Sensor (20, 22) und mit mindestens einem zweiten Aktor (4, 3, 9) kommunikativ verbindbar ist, wobei der mindestens eine erste Sensor (18) von dem mindestens einen zweiten Sensor (20, 22) verschieden ist, wobei die Einrichtung (12) ausgebildet ist:
die Zuordnung aus dem Speicher zu laden;
unter Verwendung der Zuordnung das erste Ausgabesignal als ausschliessliche Funktion des bestimmten oder hinterlegten Korrekturwertes und/oder der aktuellen Ausgabesignale zu erzeugen und an den mindestens einen ersten Aktor (3, 4, 9) zu senden;
ein zweites Eingangssignal von dem mindestens einen zweiten Sensor (20, 22) zu empfangen, wobei das zweite Eingangssignal eine Flussrate angibt;
das zweite Eingangssignal zu einem zweiten Messwert zu verarbeiten;
ein zweites Regelsignal als Funktion des bestimmten oder hinterlegten Korrekturwertes und als Funktion mindestens einer Grösse ausgewählt aus:
- dem zweiten Eingangssignal,
- dem zweiten Messwert
zu bestimmen; und
das zweite Regelsignal an den mindestens einen zweiten Aktor (4, 3, 9) zu senden.

9. Die Einrichtung (12) gemäss einem der Ansprüche 1 bis 7, wobei im Speicher zusätzlich eine Zuordnung von Korrekturwerten und/oder aktueller Ausgabesignale zu ersten Ausgabesignalen hinterlegt ist, wobei die Einrichtung (12) zusätzlich mit mindestens einem zweiten Sensor (20, 22) und mit mindestens einem zweiten Aktor (4, 3, 9) kommunikativ verbindbar ist, wobei der mindestens eine erste Sensor (18) von dem mindestens einen zweiten Sensor (20, 22) verschieden ist, wobei die Einrichtung (12) ausgebildet ist:
die Zuordnung aus dem Speicher zu laden;
unter Verwendung der Zuordnung das erste Ausgabesignal als ausschliessliche Funktion des bestimmten oder hinterlegten Korrekturwertes und/oder der aktuellen Ausgabesignale zu erzeugen und an den mindestens einen ersten Aktor (3, 4, 9) zu senden;
einen ersten Sollwert, welcher eine Flussrate angibt, aus dem Korrekturwert und mindestens einer Grösse ausgewählt aus
- dem ersten Ausgabesignal,
- dem ersten Eingangssignal,
- dem ersten Messwert
zu erzeugen;
ein zweites Eingangssignal von dem mindestens einen zweiten Sensor (20, 22) zu empfangen, wobei das zweite Eingangssignal eine Flussrate angibt;
das zweite Eingangssignal zu einem zweiten Messwert zu verarbeiten;
ein drittes Regelsignal als Funktion des ersten Sollwertes und als Funktion mindestens einer Grösse ausgewählt aus:
- dem zweiten Eingangssignal,
- dem zweiten Messwert
zu bestimmen; und
das dritte Regelsignal an den mindestens einen zweiten Aktor (4, 3, 9) zu senden.

10. Die Einrichtung (12) gemäss einem der Ansprüche 1 bis 9, wobei im Speicher der Einrichtung (12) ein erster Index für einen ersten Brennstoff und ein zweiter Index für einen zweiten Brennstoff hinterlegt sind und die Einrichtung (12) ausgebildet ist:
den mindestens einen Faktor rechnerisch als Funktion des ersten Indexes und als Funktion des zweiten Indexes zu bestimmen; und
den mindestens einen Faktor im Speicher der Einrichtung (12) zu hinterlegen.

11. Die Einrichtung (12) gemäss einem der Ansprüche 1 bis 10, wobei die Einrichtung (12) ausgebildet ist:
nach dem Senden des ersten Ausgabesignales an den mindestens einen ersten Aktor (3, 4, 9) ein drittes Eingangssignal von dem mindestens einen ersten Sensor (18) zu empfangen;
das dritte Eingangssignal zu einem dritten Messwert, welcher ein Verbrennungsluftverhältnis und/oder eine Luftzahl λ und/oder einen Sauerstoffgehalt angibt, zu verarbeiten;
den dritten Messwert mit dem mindestens einen unteren Grenzwert zu vergleichen;
falls der dritte Messwert grösser als der mindestens eine untere Grenzwert ist:
auf Basis des dritten Messwertes und/oder auf Basis einer Tot- und/oder Verzögerungszeit der Verbrennungsvorrichtung (1) einen Ausgabewert, der vom bestimmten oder hinterlegten Korrekturwert verschieden ist, zu erzeugen; und
ein zweites Ausgabesignal als Funktion des Ausgabewertes zu erzeugen und das zweite Ausgabesignal an den mindestens einen ersten Aktor (3, 4, 9) zu senden.

12. Die Einrichtung (12) gemäss einem der Ansprüche 1 bis 10, wobei die Einrichtung (12) ausgebildet ist:
nach dem Senden des ersten Ausgabesignales an den mindestens einen ersten Aktor (3, 4, 9) ein viertes Eingangssignal von dem mindestens einen ersten Sensor (18) zu empfangen;
das vierte Eingangssignal zu einem vierten Messwert, welcher ein Verbrennungsluftverhältnis und/oder eine Luftzahl λ und/oder einen Sauerstoffgehalt angibt, zu verarbeiten;
dem vierten Messwert eine zu erwartende Änderung eines Eingangssignales des mindestens einen ersten Sensors (18) aufgrund bisheriger Ausgabesignale, unter Berücksichtigung einer Tot- und/oder Verzögerungszeit der Verbrennungsvorrichtung (1) hinzuzurechnen;
einen zweiten Regelsollwert, welcher ein Verbrennungsluftverhältnis und/oder eine Luftzahl λ und/oder einen Sauerstoffgehalt angibt, als Funktion des bestimmten oder hinterlegten Korrekturwertes und als Funktion der Tot- und/oder Verzögerungszeit zu erzeugen; und
die Verbrennungsvorrichtung (1) anhand des zweiten Regelsollwertes zu regeln.

13. Die Einrichtung (12) gemäss einem der Ansprüche 1 bis 10, wobei die Einrichtung (12) mit mindestens einem oder mit mindestens dem einen zweiten Sensor (20, 22) kommunikativ verbunden ist und ausgebildet ist:
nach dem Senden des ersten Ausgabesignales an den mindestens einen ersten Aktor (3, 4, 9) ein fünftes Eingangssignal von dem mindestens einen zweiten Sensor (20, 22) zu empfangen, wobei das fünfte Eingangssignal eine Flussrate angibt;
das fünfte Eingangssignal zu einem fünften Messwert zu verarbeiten;
ein sechstes Eingangssignal oder mehrere sechste Eingangssignale von dem mindestens einen ersten Sensor (18) zu empfangen;
einen dritten Regelsollwert, welcher ein Verbrennungsluftverhältnis und/oder eine Luftzahl λ und/oder einen Sauerstoffgehalt angibt, als Funktion des fünften Messwertes und als Funktion des einen sechsten Eingangssignales oder der mehreren sechsten Eingangssignale und/oder als Funktion einer Tot- und/oder Verzögerungszeit der Verbrennungsvorrichtung (1) zu erzeugen; und
die Verbrennungsvorrichtung (1) anhand des dritten Regelsollwertes zu regeln.

14. Die Einrichtung (12) gemäss einem der Ansprüche 1 bis 13, wobei die Einrichtung (12) kommunikativ mit mindestens einem Sicherheitsabsperrventil (7, 8) verbunden ist, wobei die Einrichtung (12) ausgebildet ist:
nach dem Senden des ersten Ausgabesignales an den mindestens einen ersten Aktor (3, 4, 9) und nach Ablauf einer Tot- und/oder Verzögerungszeit der Verbrennungsvorrichtung (1) ein siebtes Eingangssignal von dem mindestens einen ersten Sensor (18) zu empfangen;
das siebte Eingangssignal zu einem siebten Messwert, welcher ein Verbrennungsluftverhältnis und/oder eine Luftzahl λ und/oder einen Sauerstoffgehalt angibt, zu verarbeiten;
den siebten Messwert mit dem mindestens einen unteren oder dem mindestens einen oberen Grenzwert zu vergleichen;
falls der siebte Messwert kleiner als der mindestens eine untere Grenzwert ist oder grösser als der mindestens eine obere Grenzwert ist:
ein Schliesssignal zu erzeugen; und
das Schliesssignal an das mindestens eine Sicherheitsabsperrventil (7, 8) zu senden.

15. Verbrennungsvorrichtung (1) umfassend mindestens einen Feuerraum (2), eine Einrichtung gemäss einem der Ansprüche 1 bis 14, den mindestens einen ersten Aktor (3, 4, 9), welcher auf die Brennstoffzufuhr oder die Luftzufuhr zum mindestens einen Feuerraum (2) wirkt, und den mindestens einen ersten Sensor (18)
wobei die Einrichtung (12) kommunikativ mit dem mindestens einen ersten Aktor (3, 4, 9) verbunden ist; und
wobei die Einrichtung (12) kommunikativ mit dem mindestens einen ersten Sensor (18) verbunden ist.

## Claims

1. Apparatus (12) for control and/or regulation of a combustion apparatus (1), the control and/or regulation apparatus (12) comprising a non-volatile memory in which at least one limit value and at least one factor and/or a correction value are stored, wherein the apparatus (12) is able to be communicatively coupled with at least one first sensor (18) and to at least one first actuator (3, 4, 9), wherein the at least one first actuator (3, 4, 9) is selected from a fan (3), an air flap (4) with setting drive and a fuel actuator (9) with setting drive for changing a fuel supply, and wherein the apparatus (12) is configured to:
receive a first input signal from the at least one first sensor (18);
process the first input signal to form a first measured value, which specifies a fuel air ratio and/or an air ratio λ and/or an oxygen content;
load the at least one limit value from the non-volatile memory and compare the first measured value with the at least one limit value;
if the first measured value is less than the at least one limit value or is greater than the at least one limit value, produce a produced correction value by precisely one of the following ways i or ii:
i. load the at least one factor from the memory and determine the produced correction value computationally as a function of the at least one limit value and as a function of the at least one factor and as a function of the first measured value;
ii. load the stored correction value from the non-volatile memory;
create a first output signal as a function of the stored correction value and send the first output signal to the at least one first actuator (3, 4, 9).

2. The apparatus (12) according to claim 1, wherein the apparatus (12) is configured to:
create the first output signal as an exclusive function of the determined or stored correction value and/or as a function of current output signals.

3. The apparatus (12) according to claim 1, wherein the first output signal is a first regulation signal and the apparatus (12) is configured to:
determine the first regulation signal as a function of the determined or stored correction value and as a function of at least one variable selected from:
- the first input signal,
- the first measured value;
and
send the first regulation signal to the at least one first actuator (3, 4, 9).

4. The apparatus (12) according to one of claims 1 to 3,
wherein the at least one factor is greater than one and the at least one limit value is at least a lower limit value and the apparatus (12) is configured to:
if the first measured value is less than the at least one lower limit value:
determine the correction value computationally through augmentation of the first measured value or through augmentation of the at least one lower limit value in accordance with the at least one factor.

5. The apparatus (12) according to one of claims 1 to 3,
wherein the at least one factor is greater than one and the at least one limit value is at least an upper limit value and the apparatus (12) is configured to:
if the first measured value is greater than the at least one upper limit value:
determine the correction value computationally by division of the first measured value or of the at least one upper limit value by the at least one factor.

6. The apparatus (12) according to one of claims 1 to 3,
wherein the at least one factor is greater than zero and the at least one limit value is at least a lower limit value and the apparatus (12) is configured to:
if the first measured value is less than the at least one lower limit value:
determine the correction value computationally by increasing the first measured value or by increasing the at least one lower limit value by the at least one factor.

7. The apparatus (12) according to one of claims 1 to 3,
wherein the at least one factor is greater than zero and the at least one limit value is at least an upper limit value and the apparatus (12) is configured to:
if the first measured value is greater than the at least one upper limit value:
determine the correction value computationally by reduction of the first measured value or by reduction of the at least one upper limit value by the at least one factor.

8. The apparatus (12) according to one of claims 1 to 7,
wherein a map of correction values and/or current output signals to first output signals is additionally stored in the memory, wherein the apparatus (12) is additionally able to be communicatively coupled with at least one second sensor (20, 22) and to at least one second actuator (4, 3, 9), wherein the at least one first sensor (18) is different from the at least one second sensor (20, 22), wherein the apparatus (12) is configured to:
load the map from the memory;
use the map to create the first output signal as an exclusive function of the determined or stored correction value and/or of the current output signals and send it to the at least one first actuator (3, 4, 9);
receive a second input signal from the at least one second sensor (20, 22), wherein the second input signal specifies a flow rate;
process the second input signal to form a second measured value;
determine a second regulation signal as a function of the determined or stored correction value and as a function of at least one variable selected from:
- the second input signal,
- the second measured value;
and
send the second regulation signal to the at least one second actuator (4, 3, 9).

9. The apparatus (12) according to one of claims 1 to 7,
wherein a map of correction values and/or current output signals to first output signals is additionally stored in the memory, wherein the apparatus (12) is additionally able to be communicatively coupled with at least one second sensor (20, 22) and to at least one second actuator (4, 3, 9), wherein the at least one first sensor (18) is different from the at least one second sensor (20, 22), wherein the apparatus (12) is configured to:
load the map from the memory;
use the map to create the first output signal as an exclusive function of the determined or stored correction value and/or of the current output signals and send it to the at least one first actuator (3, 4, 9);
create a first setpoint value, which specifies a flow rate, from the correction value and at least one variable selected from
- the first output signal,
- the first input signal,
- the first measured value;
receive a second input signal from the at least one second sensor (20, 22), wherein the second input signal specifies a flow rate;
process the second input signal to form a second measured value;
determine a third regulation signal as a function of the first setpoint value and as a function of at least one variable selected from:
- the second input signal,
- the second measured value;
and
send the third regulation signal to the at least one second actuator (4, 3, 9).

10. The apparatus (12) according to one of claims 1 to 9, wherein a first index for a first fuel and a second index for a second fuel are stored in the memory of the apparatus (12) and the apparatus (12) is configured to:
determine the at least one factor computationally as a function of the first index and as a function of the second index; and
store the at least one factor in the memory of the apparatus (12).

11. The apparatus (12) according to one of claims 1 to 10,
wherein the apparatus (12) is configured to:
after the sending of the first output signal to the at least one first actuator (3, 4, 9), receive a third input signal from the at least one first sensor (18);
process the third input signal to form a third measured value, which specifies a fuel air ratio and/or an air ratio λ and/or an oxygen content;
compare the third measured value with the at least one lower limit value;
if the third measured value is greater than the at least one lower limit value:
on the basis of the third measured value and/or on the basis of a dead time and/or delay time of the combustion apparatus (1), create an output value, which is different from the determined or stored correction value; and
create a second output signal as a function of the output value and send the second output signal to the at least one first actuator (3, 4, 9).

12. The apparatus (12) according to one of claims 1 to 10,
wherein the apparatus (12) is configured to:
after the sending of the first output signal to the at least one first actuator (3, 4, 9), receive a fourth input signal from the at least one first sensor (18);
process the fourth input signal to form a fourth measured value, which specifies a fuel air ratio and/or an air ratio λ and/or an oxygen content;
add to the fourth measured value a change to be expected of an input signal of the at least one first sensors (18) because of previous output signals, while taking into account a dead time and/or delay time of the combustion apparatus (1);
create a second setpoint regulation value, which specifies a fuel air ratio and/or an air ratio λ and/or an oxygen content, as a function of the determined or stored correction value and as a function of the dead time and/or delay time; and
regulate the combustion apparatus (1) with the aid of the second setpoint regulation value.

13. The apparatus (12) according to one of claims 1 to 10,
wherein the apparatus (12) is communicatively coupled with at least one or to at least the one second sensor (20, 22) and is configured to:
after the sending of the first output signal to the at least one first actuator (3, 4, 9), receive a fifth input signal from the at least one second sensor (20, 22), wherein the fifth input signal specifies a flow rate;
process the fifth input signal to form a fifth measured value;
receive a sixth input signal or a number of sixth input signals from the at least one first sensor (18);
create a third setpoint regulation value, which specifies a fuel air ratio and/or an air ratio λ and/or an oxygen content, as a function of the fifth measured value and as a function of the sixth input signal or of the number of sixth input signals and/or as a function of a dead time and/or delay time of the combustion apparatus (1); and
regulate the combustion apparatus (1) with the aid of the third setpoint regulation value.

14. The apparatus (12) according to one of claims 1 to 13,
wherein the apparatus (12) is communicatively coupled with at least one safety shutoff valve (7, 8), wherein the apparatus (12) is configured to:
after the sending of the first output signal to the at least one first actuator (3, 4, 9) and after a dead time and/or delay time of the combustion apparatus (1) has elapsed, receive a seventh input signal from the at least one first sensor (18);
process the seventh input signal to form a seventh measured value, which specifies a fuel air ratio and/or an air ratio λ and/or an oxygen content;
compare the seventh measured value with the at least one lower or the at least one upper limit value;
if the seventh measured value is less than the at least one lower limit value or is greater than the at least one upper limit value:
create a closure signal; and
send the closure signal to the at least one safety shutoff valve (7, 8).

15. Combustion apparatus (1) comprising at least one combustion chamber (2), an apparatus according to one of claims 1 to 14, the at least one first actuator (3, 4, 9), which acts on the fuel supply or the air supply to the at least one combustion chamber (2), and the at least one first sensor (18),
wherein the apparatus (12) is communicatively coupled with the at least one first actuator (3, 4, 9); and
wherein the apparatus (12) is communicatively coupled with the at least one first sensor (18).

## Revendications

1. Appareillage (12) de commande et/ou de régulation d'un dispositif de combustion (1), l'appareillage (12) de commande et/ou de régulation comprenant une mémoire non volatile, dans laquelle sont enregistrés au moins une valeur limite et au moins un facteur et/ou une valeur corrective enregistrée, l'appareillage (12) pouvant être mis en liaison communicative avec au moins un premier capteur (18) et avec au moins un premier actionneur (3, 4, 9), où l'au moins un premier actionneur (3, 4, 9) est choisi parmi un ventilateur (3), un volet d'aération (4) avec vérin et un actionneur de clapet à carburant (9) avec vérin pour modifier une alimentation en carburant, et où l'appareillage (12) est conçu pour :
recevoir un premier signal en entrée de l'au moins un premier capteur (18) ;
traiter le premier signal en entrée en une première valeur de mesure, qui indique un rapport d'air de combustion et/ou un facteur d'air λ et/ou une teneur en oxygène ;
charger l'au moins une valeur limite de la mémoire non volatile et comparer la première valeur de mesure à l'au moins une valeur limite ;
si la première valeur de mesure est inférieure à l'au moins une valeur limite ou et supérieure à l'au moins une valeur limite, générer une valeur corrective d'exactement une des façons suivantes i ou ii :
i. charger l'au moins un facteur issu de la mémoire et déterminer arithmétiquement la valeur corrective générée en fonction de l'au moins une valeur limite et en fonction de l'au moins un facteur et en fonction de la première valeur de mesure ;
ii. charger la valeur corrective générée depuis la mémoire non volatile ;
produire un premier signal en sortie en fonction de la valeur corrective générée et envoyer le premier signal en sortie à l'au moins un premier actionneur (3, 4, 9).

2. L'appareillage (12) selon la revendication 1, l'appareillage (12) étant conçu pour :
produire le premier signal en sortie en fonction de la valeur corrective déterminée ou enregistrée et/ou en fonction de signaux en sortie actuels.

3. L'appareillage (12) selon la revendication 1, dans lequel le premier signal en sortie est un premier signal de régulation et l'appareillage (12) étant conçu pour :
déterminer le premier signal de régulation en fonction de la valeur corrective déterminée ou enregistrée et en fonction d'au moins une valeur choisie parmi :
- le premier signal en entrée,
- la première valeur de mesure
et
envoyer à l'au moins un premier signal de régulation au premier actionneur (3, 4, 9).

4. L'appareillage (12) selon l'une des revendications 1 à 3, dans lequel l'au moins un facteur est supérieur à un et l'au moins une valeur limite est au moins une valeur limite inférieure, et l'appareillage (12) est conçu pour :
si la première valeur de mesure est inférieure à l'au moins une valeur limite inférieure :
déterminer arithmétiquement la valeur corrective par multiplication de la première valeur de mesure ou par multiplication de l'au moins une valeur limite inférieure par l'au moins un facteur.

5. L'appareillage (12) selon l'une des revendications 1 à 3, dans lequel l'au moins un facteur est supérieur à un et l'au moins une valeur limite est au moins une valeur limite supérieure, et l'appareillage (12) est conçu pour :
si la première valeur de mesure est supérieure à l'au moins une valeur limite supérieure :
déterminer arithmétiquement la valeur corrective par division de la première valeur de mesure ou de l'au moins une valeur limite supérieure par l'au moins un facteur.

6. L'appareillage (12) selon l'une des revendications 1 à 3, dans lequel l'au moins un facteur est supérieur à zéro et l'au moins une valeur limite est au moins une valeur limite inférieure, et l'appareillage (12) est conçu pour :
si la première valeur de mesure est inférieure à l'au moins une valeur limite inférieure :
déterminer arithmétiquement la valeur corrective par augmentation de la première valeur de mesure ou par augmentation de l'au moins une valeur limite inférieure de l'au moins un facteur.

7. L'appareillage (12) selon l'une des revendications 1 à 3, dans lequel l'au moins un facteur est supérieur à zéro et l'au moins une valeur limite est au moins une valeur limite supérieure, et l'appareillage (12) est conçu pour :
si la première valeur de mesure est supérieure à l'au moins une valeur limite supérieure :
déterminer arithmétiquement la valeur corrective par diminution de la première valeur de mesure ou par diminution de l'au moins une valeur limite supérieure de l'au moins un facteur.

8. L'appareillage (12) selon l'une des revendications 1 à 7, dans lequel est enregistrée en plus en mémoire une affectation des valeurs correctives et/ou des signaux actuels en sortie à de premiers signaux en sortie, l'appareillage (12) pouvant en plus être mis en liaison communicative avec au moins un second capteur (20, 22) et avec au moins un second actionneur (4, 3, 9), où l'au moins un premier capteur (18) est différent de l'au moins un second capteur (20, 22), l'appareillage (12) étant conçu pour :
charger l'affectation depuis la mémoire ;
en utilisant l'affectation, produire le premier signal en sortie en fonction exclusive de la valeur corrective déterminée ou enregistrée et/ou des signaux actuels en sortie et l'envoyer à l'au moins un premier actionneur (3, 4, 9) ;
recevoir un deuxième signal en entrée depuis l'au moins un second capteur (20, 22), le deuxième signal en entrée indiquant un débit ;
traiter le deuxième signal en entrée en une deuxième valeur de mesure ;
déterminer un deuxième signal de régulation en fonction de la valeur corrective déterminée ou enregistrée et en fonction d'au moins une valeur choisie parmi :
- le deuxième signal en entrée,
- la deuxième valeur de mesure
et
envoyer le deuxième signal de régulation à l'au moins un second actionneur (4, 3, 9).

9. L'appareillage (12) selon l'une des revendications 1 à 7, dans lequel est enregistrée en plus en mémoire une affectation des valeurs correctives et/ou des signaux actuels en sortie à de premiers signaux en sortie, l'appareillage (12) pouvant en plus être mis en liaison communicative avec au moins un second capteur (20, 22) et avec au moins un second actionneur (4, 3, 9), où l'au moins un premier capteur (18) est différent de l'au moins un second capteur (20, 22), l'appareillage (12) étant conçu pour :
charger l'affectation depuis la mémoire ;
en utilisant l'affectation, produire le premier signal en sortie en fonction exclusive de la valeur corrective déterminée ou enregistrée et/ou des signaux actuels en sortie et l'envoyer à l'au moins un premier actionneur (3, 4, 9) ;
produire une première valeur de consigne, qui indique un débit, à partir de la valeur corrective et d'au moins une valeur choisie parmi :
- le premier signal en sortie,
- le premier signal en entrée,
- la première valeur de mesure ;
recevoir un deuxième signal en entrée depuis l'au moins un second capteur (20, 22), le deuxième signal en entrée indiquant un débit ;
traiter le deuxième signal en entrée en une deuxième valeur de mesure ;
déterminer un troisième signal de régulation en fonction de la première valeur de consigne et en fonction d'au moins une valeur choisie parmi :
- le deuxième signal en entrée,
- la deuxième valeur de mesure
et
envoyer le troisième signal de régulation à l'au moins un second actionneur (4, 3, 9).

10. L'appareillage (12) selon l'une des revendications 1 à 9, où dans la mémoire de l'appareillage (12) sont enregistrés un premier indice pour un premier carburant et un second indice pour un deuxième carburant, et l'appareillage (12) est conçu pour :
déterminer arithmétiquement au moins un facteur en fonction du premier indice et en fonction du second indice ; et
enregistrer l'au moins un facteur dans la mémoire de l'appareillage (12).

11. L'appareillage (12) selon l'une des revendications 1 à 10, l'appareillage (12) étant conçu pour :
après l'envoi du premier signal en sortie à l'au moins un premier actionneur (3, 4, 9), recevoir un troisième signal en entrée depuis l'au moins un premier capteur (18) ;
traiter le troisième signal en entrée en une troisième valeur de mesure, qui indique un rapport d'air de combustion et/ou un facteur d'air λ et/ou une teneur en oxygène ;
comparer la troisième valeur de mesure à l'au moins une valeur limite inférieure ;
si la troisième valeur de mesure est supérieure à l'au moins une valeur limite inférieure :
produire, à partir de la troisième valeur de mesure et/ou à partir d'un temps mort et/ou d'un retard du dispositif de combustion (1), une valeur en sortie différente de la valeur corrective déterminée ou enregistrée ; et
produire un second signal en sortie en fonction de la valeur en sortie et envoyer le second signal en sortie à l'au moins un premier actionneur (3, 4, 9).

12. L'appareillage (12) selon l'une des revendications 1 à 10, l'appareillage (12) étant conçu pour :
après l'envoi du premier signal en sortie à l'au moins un premier actionneur (3, 4, 9), recevoir un quatrième signal en entrée depuis l'au moins un premier capteur (18) ;
traiter le quatrième signal en entrée en une quatrième valeur de mesure, qui indique un rapport d'air de combustion et/ou un facteur d'air λ et/ou une teneur en oxygène ;
ajouter à la quatrième valeur de mesure une modification attendue d'un signal en entrée de l'au moins un premier capteur (18) sur la base des signaux en sortie jusqu'à cet instant, en prenant en compte un temps mort et/ou un retard du dispositif de combustion (1) ;
produire une deuxième valeur de consigne de régulation qui indique un rapport d'air de combustion et/ou un facteur d'air λ et/ou une teneur en oxygène en fonction de la valeur corrective déterminée ou enregistrée et en fonction du temps mort et/ou du retard ; et
réguler le dispositif de combustion (1) grâce à la deuxième valeur de consigne de régulation.

13. L'appareillage (12) selon l'une des revendications 1 à 10, l'appareillage (12) étant en liaison communicative avec au moins un ou avec au moins l'unique second capteur (20, 22) et conçu pour :
après l'envoi du premier signal en sortie à l'au moins un premier actionneur (3, 4, 9), recevoir un cinquième signal en entrée depuis l'au moins un second capteur (20, 22), le cinquième signal en entrée indiquant un débit ;
traiter le cinquième signal en entrée en une cinquième valeur de mesure ;
recevoir un sixième signal en entrée ou plusieurs sixièmes signaux en entrée de l'au moins un premier capteur (18) ;
produire une troisième valeur de consigne de régulation qui indique un rapport d'air de combustion et/ou un facteur d'air λ et/ou une teneur en oxygène en fonction de la cinquième valeur de mesure et en fonction de l'unique sixième valeur en entrée ou des plusieurs sixièmes valeurs en entrée et/ou en fonction d'un temps mort et/ou d'un retard du dispositif de combustion (1) ; et
réguler le dispositif de combustion (1) grâce à la troisième valeur de consigne de régulation.

14. L'appareillage (12) selon l'une des revendications 1 à 13, l'appareillage (12) étant en liaison communicative avec au moins une soupape d'arrêt de sécurité (7, 8), l'appareil (12) étant conçu pour :
après l'envoi du premier signal en sortie à l'au moins un premier actionneur (3, 4, 9) et à l'issue d'un temps mort et/ou d'un retard du dispositif de combustion (1), recevoir un septième signal en entrée depuis l'au moins un premier capteur (18) ;
traiter le septième signal en entrée en une septième valeur de mesure, qui indique un rapport d'air de combustion et/ou un facteur d'air λ et/ou une teneur en oxygène ;
comparer la septième valeur de mesure à l'au moins une valeur limite inférieure ou l'au moins une valeur limite supérieure ;
si la septième valeur de mesure est inférieure à l'au moins une valeur limite inférieure ou est supérieure à l'au moins une valeur limite supérieure :
produire un signal de fermeture ; et
envoyer le signal de fermeture à l'au moins une soupape d'arrêt de sécurité (7, 8).

15. Dispositif de combustion (1) comprenant au moins une chambre de combustion (2), un dispositif selon l'une des revendications 1 à 14, l'au moins un premier actionneur (3, 4, 9) qui agit sur l'alimentation en carburant ou sur l'alimentation en air de l'au moins une chambre de combustion (2), et l'au moins un premier capteur (18)
où l'appareillage (12) est en liaison communicative avec l'au moins un premier actionneur (3, 4, 9) ; et
où l'appareillage (12) est en liaison communicative avec l'au moins un premier capteur (18).
